# FASCICULE DE BREVET EUROPEEN

(11) **EP 2 886 571 B1**
(45) Date de publication et mention de la délivrance du brevet: **30.01.2019**
(21) Numéro de dépôt: 14196750.5
(22) Date de dépôt: 08.12.2014
(51) Int. Cl.: C08G 18/48, C08G 18/10, C08G 18/30, C09J 175/08, C08G 18/75, C08G 18/76, C08G 18/78

(54) **Composition adhésive réticulable à l'humidité et à la chaleur à base de polyuréthane et comprenant une faible teneur en monomère isocyanate**
Feuchtigkeits- und wärmehärtende Klebezusammensetzung auf Polyurethanbasis, die einen geringen Gehalt an monomeren Isocyanaten aufweist
Moisture- and heat-crosslinkable polyurethane-based adhesive composition comprising a low content of isocyanate monomer

(30) Priorité: 19.12.2013 FR 1362993
(43) Date de publication de la demande: 24.06.2015
(73) Titulaire: BOSTIK SA, 93210 La Plaine Saint Denis (FR)
(72) Inventeur: Michaud, Guillaume, 60200 COMPIEGNE (FR); Simon, Frédéric, 60400 PONT L'EVEQUE (FR)
(74) Mandataire: Chahine, Audrey Claire

(56) Documents cités:
- WO-A1-00/43432
- JP-A- S5 321 236

## Description

Le domaine technique dans lequel s'inscrit l'objet de la présente demande est le domaine des adhésifs sensibles à la pression, réticulés sous l'action de l'humidité et de la chaleur.

Plus précisément, l'invention concerne une composition adhésive réticulable à l'humidité et à la chaleur, comprenant au moins un polyuréthane particulier comprenant deux groupes isocyanates terminaux, au moins une résine tackifiante phénolique, et au moins un catalyseur de réticulation, avec notamment une teneur en monomère isocyanate particulièrement faible ; et un support auto-adhésif revêtu d'un adhésif sensible à la pression consistant en ladite composition réticulée. Ledit support autoadhésif est utile pour la fabrication d'étiquettes et/ou de rubans auto-adhésifs.

Les adhésifs sensibles à la pression (également dénommés colles auto-adhésives ou encore, en anglais, "Pressure Sensitive Adhesives" ou PSA) sont des substances conférant au support qui en est revêtu un pouvoir collant immédiat à température ambiante (souvent désigné sous le terme de "tack"), lequel permet son adhésion instantanée à un substrat sous l'effet d'une pression légère et brève.

Les PSA sont largement utilisés pour la fabrication d'étiquettes auto-adhésives qui sont fixées sur des articles à des fins de présentation d'informations (telles que code barre, dénomination, prix) et/ou à des fins décoratives. Les PSA sont également mis en oeuvre pour la fabrication de rubans auto-adhésifs d'utilisations variées. On peut citer par exemple outre le ruban adhésif transparent largement utilisé dans la vie quotidienne : la mise en forme et l'assemblage d'emballages en carton ; la protection de surfaces pour les travaux de peinture, dans la construction ; le maintien de câbles électriques dans l'industrie des transports ; le collage des moquettes par rubans adhésifs à double face.

En vue de la fabrication d'étiquettes et/ou rubans auto-adhésifs, les PSA sont souvent appliqués par des procédés d'enduction en continu sur la totalité de la surface d'une couche support (le cas échéant imprimable) de grandes dimensions, à raison d'une quantité (généralement exprimée en g/m²) et désignée ci-après par le terme de "grammage". La couche support est constituée de papier ou de film d'un matériau polymère à une ou plusieurs couches. La couche d'adhésif qui recouvre la couche support peut être elle-même recouverte d'une couche anti-adhérente protectrice (souvent dénommée par l'appellation anglaise de "release liner"), par exemple constituée d'un film siliconé. Le système multicouche obtenu est généralement conditionné par enroulement sous forme de larges bobines ayant jusqu'à deux mètres de largeur et un mètre de diamètre, qui peuvent être stockées et transportées.

Ces systèmes multicouches peuvent être ultérieurement convertis en étiquettes auto-adhésives applicables par l'utilisateur final, au moyen de procédés de transformation qui incluent l'impression des éléments informatifs et/ou décoratifs désirés sur la face imprimable de la couche support, puis la découpe à la forme et aux dimensions souhaitées. La couche anti-adhérente protectrice peut être facilement enlevée sans modification de la couche d'adhésif qui reste fixée sur la couche support. Après séparation de sa couche anti-adhérente protectrice, l'étiquette est appliquée sur l'article à revêtir soit manuellement, soit à l'aide d'étiqueteuses sur des chaînes automatisées de conditionnement.

Ces systèmes multicouches peuvent être également transformés en rubans auto-adhésifs par découpe et conditionnement en rouleaux de largeur et de longueur déterminée.

Les PSA permettent, en raison de leur tack élevé à température ambiante, une prise ou accroche rapide de l'étiquette et/ou du ruban auto-adhésifs sur le substrat (ou article) à revêtir (par exemple, s'agissant d'étiquettes, sur des bouteilles ou bien, s'agissant de rubans, sur des cartons d'emballage à mettre en forme), propre à l'obtention de cadences de production industrielle importantes.

Dans le cadre de la présente demande, on s'est intéressé à une catégorie particulière de PSA : les HMPSA ou encore « Hot Melt Pressure Sensitive Adhesive » en anglais, qui sont des adhésifs thermofusibles et qui possèdent des propriétés au moins comparables aux PSA, notamment en terme de force d'adhésion, de tack et d'auto-adhésion.

En général, les compositions à la base de ces adhésifs sont solides ou quasi-solides à température ambiante, et nécessitent d'être fondues avant dépôt (ou enduction) sur un support. Après refroidissement et éventuellement réticulation de la composition appliquée, le support est revêtu d'un joint adhésif possédant un tack et un pouvoir adhésif importants sur divers substrats.

On connait de l'art antérieur l'utilisation de polymères de faible masse moléculaire (ou pré-polymères) de type polyuréthane, réticulables à l'humidité et à la chaleur, dans la préparation d'adhésifs thermofusibles sensibles à la pression (HMPSA). La préparation de ces polyuréthanes se fait par réaction d'un polyol (généralement un diol) avec un excès stoechiométrique plus ou moins important de polyisocyanate (généralement un diisocyanate). Cet excès stoechiométrique peut être traduit par un rapport molaire NCO/OH (noté « rapport NCO/OH ») strictement supérieur à 1, qui correspond au rapport molaire du nombre de groupes isocyanates (NCO) sur le nombre de groupes hydroxyles (OH) portés par les espèces réactives porteuses de telles fonctions, utilisées dans la préparation du polyuréthane. En se plaçant dans un rapport NCO/OH donné, il est possible de faire réagir toutes les fonctions OH du (ou des) polyol(s) de manière à obtenir un polyuréthane comportant uniquement des groupes isocyanates aux extrémités de la chaine polymérique. On obtient ainsi un polyuréthane comprenant des groupes terminaux isocyanates.

Dans le domaine des adhésifs, on désigne de tels polyuréthanes par « polyuréthanes réactifs » ou « polyuréthane à terminaison NCO », par opposition aux « polyuréthane à terminaison OH » qui désignent des polyuréthanes dans lesquels les groupes terminaux sont des groupes hydroxyles, qui ne sont pas sensibles à l'humidité. Ces polyuréthanes à terminaison OH sont obtenus en utilisant un excès stoechiométrique de polyol par rapport à la quantité de polyisocyanate, soit un rapport NCO/OH strictement inférieur à 1, et ne sont pas réticulables à l'humidité du fait de l'absence de groupes isocyanates terminaux.

Dans le cadre de la présente demande, on cherche à mettre à disposition des compositions à base de polyuréthane à terminaison NCO, réticulables à l'humidité et à la chaleur, et conduisant après réticulation à des adhésifs sensibles à la pression possédant de bonnes propriétés adhésives. Or du fait de la réactivité de ces polyuréthanes face à la présence d'humidité (atmosphérique), ou plus généralement de composés possédant un atome d'hydrogène labile tel que des amines ou alcools, il est difficile de formuler ces polyuréthanes sous forme de composition stable au stockage, et on a donc souvent recours à des systèmes bicomposants (ou kit) qui permettent de synthétiser le polyuréthane au dernier moment juste avant utilisation de la composition. En général, ces systèmes bicomposants permettent de stocker de manière séparée les réactifs nécessaires à la synthèse du polyuréthane à savoir le(s) polyol(s) d'une part, et le(s) polyisocyanate(s) d'autre part, éventuellement en présence d'autres ingrédients, et de mélanger ces réactifs, juste avant utilisation de la composition. La composition adhésive obtenue est donc préparée au dernier moment juste avant son application sur un support. Toutefois, ce mode de préparation demande des efforts supplémentaires de manipulation et est compliqué à mettre en oeuvre pour l'utilisateur, en particulier lorsque les réactifs ou la composition à préparer présentent une viscosité à température ambiante (23°C) relativement élevée.

Un autre inconvénient des compositions adhésives à base de polyuréthane réactif est que celles-ci comprennent souvent une grande quantité de composés diisocyanates de faible masse molaire provenant des monomères diisocyanates (de masse molaire inférieure à 300 g/mol) utilisés en excès et n'ayant pas réagi lors de la synthèse du polyuréthane. Il a été observé que la majeure partie des compositions adhésives thermofusibles réticulables de l'art antérieur à base de polyuréthane à terminaison NCO, sont formulées à partir du polyuréthane obtenu directement après synthèse, et contiennent de ce fait l'ensemble des monomères diisocyanates résiduels (non réagis) issus de la synthèse du polyuréthane. Au final, la composition adhésive peut comprendre des quantités plus ou moins importantes de monomères diisocyanates, ce qui peut conduire à un certain nombre de problèmes, dont entre autres, un risque de toxicité pour l'homme et son environnement.

En effet, lorsque l'on envisage d'utiliser des colles réactives à base de polyuréthane à terminaison NCO dans la réalisation de films adhésifs pour sceller des emballages souples destinés aux produits alimentaires, il est souhaitable que ces colles contiennent des teneurs réduites en monomères isocyanates car ceux-ci sont susceptibles de migrer à travers les couches d'emballage souple et de contaminer les aliments contenus dans l'emballage ou au contact de celui-ci.

La présence d'une teneur importante en monomères diisocyanates libres peut générer des émissions toxiques pour l'homme et son environnement lors de l'utilisation de la composition adhésive, notamment lors de l'application à chaud de celle-ci. Pour lutter efficacement contre cette exposition aux monomères, des mesures particulières doivent être prises, par exemple la mise en place de systèmes d'extraction ou de ventilation, et de contrôle thermique adaptés. Toutefois, cela génère des coûts et contraintes supplémentaires allant à l'encontre de la mise à disposition d'un procédé de préparation industriel économique et rentable.

En raison notamment des inconvénients mentionnés ci-dessus, la plupart des règlementations obligent à étiqueter tout produit contenant une teneur en certains composés diisocyanates de masse molaire inférieure à 300 g/mol, exprimée en pourcent en poids, supérieure à une certaine limite autorisée. Pour les diisocyanates aliphatiques tels que l'hexaméthylène diisocyanate (HDI, de masse molaire égale à 168 g/mol environ) ou l'isophorone diisocyanate (IPDI, de masse molaire égale à 222 g/mol environ), cette teneur limite a été fixée à 0,5% en poids du produit ; et pour les diisocyanates aromatiques tels que le toluène diisocyanate (TDI, de masse molaire égale à 174 g/mol environ) ou le diisocyanate de diphényle méthane (MDI, de masse molaire égale à 250 g/mol environ), cette valeur a été abaissée à 0,1% en poids du produit, car ceux-ci sont connus pour former au contact de l'humidité des amines primaires aromatiques potentiellement néfastes pour la santé. La quantité de ces diisocyanates et de leurs amines correspondantes, peut être évaluée de manière bien connue par l'homme du métier à l'aide de tests pratiqués dans des conditions standards.

De fait, il est souhaitable de mettre à disposition des compositions adhésives comprenant une teneur en diisocyanate, et plus précisément en monomère diisocyanate résiduel, inférieure aux seuils d'étiquetage sus-cités, de manière à réduire les risques d'exposition à ces composés lors de leur utilisation.

Diverses solutions ont été envisagées pour réduire la teneur en monomère diisocyanate après synthèse du polyuréthane. Toutefois, ces solutions envisagées rajoutent des étapes de purification lesquelles sont généralement coûteuses et non souhaitées. Par ailleurs, la diminution de la teneur en monomère diisocyanate entraîne une augmentation significative de la viscosité du polyuréthane, qui peut rendre la formulation ou la mise en oeuvre de celui-ci difficile.

On connait de la demande internationale WO 00/43432 des compositions adhésives thermofusibles réticulables à l'humidité et à la chaleur comprenant un polyuréthane à terminaison NCO, obtenu à partir d'un polyol ayant un taux d'insaturation inférieur à 0,02 milliéquivalent par gramme, et d'un polyisocyanate, ledit polyuréthane pouvant être combiné à une variété de résines tackifiantes.

Toutefois, ces compositions ne donnent pas entière satisfaction, notamment au vu des avantages recherchés sus-cités. En effet, ces compositions comprennent des teneurs en monomères diisocyanates non réagis relativement importantes, et mettent souvent en oeuvre un catalyseur de réaction et de réticulation à base d'étain tel que le dibutyl dilaurate d'étain (DBTL) potentiellement toxique. En outre, ces compositions présentent des problèmes de compatibilité entre le polyuréthane et les résines tackifiantes conduisant d'une part, à des compositions adhésives non homogènes avant réticulation et d'autre part, à des adhésifs hétérogènes et peu performants après réticulation en terme d'adhésion.

Ainsi, il existe un besoin de pouvoir formuler des compositions adhésives à base de polyuréthane à terminaison NCO, réticulables à l'humidité et à la chaleur, qui conduisent après enduction sur un support puis réticulation, à un adhésif sensible à la pression ne présentant pas un ou plusieurs des inconvénients sus-cités.

En particulier, il existe un besoin de pouvoir formuler des compositions à très faible teneur en monomère diisocyanate de faible masse molaire, notamment inférieure aux seuils d'étiquetage réglementaire, et qui conduisent à des adhésifs sensibles à la pression, possédant un pouvoir adhésif et/ou un tack comparable, voire amélioré, par rapport aux adhésifs de l'art antérieur.

Il existe également un besoin de trouver des compositions adhésives sans solvant, respectueuses de l'homme et de l'environnement, possédant une teneur pondérale en monomère diisocyanate particulièrement faible, inférieure à celle de l'art antérieur.

Par ailleurs, il existe un besoin de mettre à disposition des compositions adhésives prêtes-à-l'emploi (dites mono-composant), suffisamment stables au stockage, pour ne pas devoir être formulées sous la forme d'un système bicomposant.

Il a maintenant été trouvé que la composition objet de la présente demande permettait de répondre en tout ou partie à ces besoins. En particulier, la composition adhésive selon l'invention ne présente pas les inconvénients de l'art antérieur, et notamment ne présente pas de problème d'incompatibilité entre le polyuréthane et la résine tackifiante utilisée.

Il a été trouvé notamment que l'association particulière objet de la présente demande, combinant un polyuréthane réactif particulier, une résine tackifiante phénolique particulière, et un catalyseur de réticulation, dans des teneurs particulières, conduisait à des adhésifs sensibles à la pression, homogènes, présentant un pouvoir d'adhésion amélioré et une teneur en monomère diisocyanate réduite par rapport aux adhésifs de l'art antérieur, et tout en conservant un pouvoir collant immédiat et un aspect satisfaisant. Les compositions adhésives selon l'invention sont transparentes.

Par ailleurs, il a été trouvé que cette association pouvait être préparée à l'aide d'un procédé de préparation ne requérant aucune étape de séparation ou de purification des monomères diisocyanates résiduels issus de la réaction de synthèse du polyuréthane, et présentait une teneur résiduelle en monomères diisocyanates particulièrement faible au regard de la réglementation.

La présente invention a donc pour objet en premier lieu une composition adhésive comprenant :
a) de 40 à 60 % en poids d'au moins un polyuréthane susceptible d'être obtenu par réaction de polyaddition :
   d'au moins un diisocyanate aromatique ou aliphatique choisi parmi les diisocyanates suivants, et leur mélange :
   a1) l'isophorone diisocyanate (IPDI),
   a2) le 2,4-toluène diisocyanate (2,4-TDI),
   a3) le 2,4'-diisocyanate de diphényleméthane (2,4'-MDI),
   a4) un dérivé d'allophanate d'hexaméthylène diisocyanate (HDI) de formule (I) : 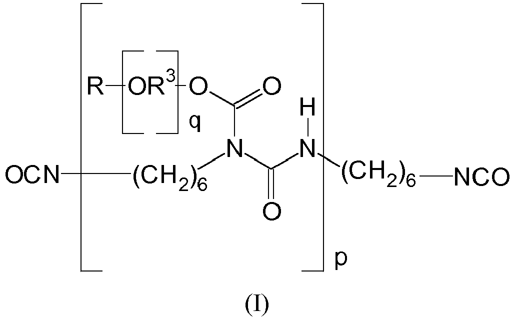 dans laquelle :
      - p est un nombre entier allant de 1 à 2 ;
      - q est un nombre entier allant de 0 à 9, et de préférence 2 à 5 ;
      - R représente une chaine hydrocarbonée, saturée ou insaturée, cyclique ou acyclique, linéaire ou ramifiée, comprenant de 1 à 20 atomes de carbone, de préférence de 6 à 14 atomes de carbone ;
      - R³ représente un groupe divalent alkylène, linéaire ou ramifié, ayant de 2 à 4 atomes de carbones, et de préférence un groupe divalent propylène ;
      avec au moins un polyéther diol, en présence ou non d'au moins un catalyseur de réaction, à une température de réaction T1 inférieure 95°C et de préférence allant de 65°C à 80°C, dans des conditions anhydres, et dans des quantités de diisocyanate(s) et de polyéther diol(s) conduisant à un rapport molaire NCO/OH, noté r₁, allant de 1,6 à 1,9, de préférence de 1,65 à 1,85 ;
b) de 39 à 59 % en poids d'au moins une résine tackifiante compatible, de masse molaire moyenne en nombre allant de 200 Da à 5000 Da, et choisies parmi les résines susceptibles d'être obtenues par l'un des procédés suivants :
   b1) polymérisation d'hydrocarbures terpéniques en présence de catalyseurs de Friedel-Crafts, suivie d'une réaction avec des phénols,
   b2) polymérisation d'alpha-méthyl styrène, suivie d'une réaction avec des phénols; et
c) de 0,01 à 1 % en poids d'au moins un catalyseur de réticulation,
lesdits pourcentages étant exprimés en poids par rapport au poids total de la composition adhésive.

D'autres objets et caractéristiques de la présente invention apparaîtront plus clairement à la lecture de la description et des exemples.

Dans la présente demande, en l'absence d'indication contraire :
- les quantités exprimées sous la forme de pourcentage correspondent à des pourcentages poids/poids ;
- les masses molaires moyennes en nombre, exprimées en gramme par mole (g/mol) sont déterminées par calcul par l'analyse de la teneur en groupes terminaux (NCO ou OH) exprimé en milliéquivalent par gramme (méq/g) et la fonctionnalité (nombre de fonction NCO ou OH par mole) de l'entité considérée (polyuréthane utilisé selon l'invention, polyéther diol ou bloc du polyéther correspondant) ;
- les masses molaires moyennes en nombre et en poids, exprimées en dalton (Da), sont déterminées par chromatographie par perméation de gel (GPC), la colonne étant calibrée avec des étalons de PolyEthylène Glycol (PEG) ;
- par « cyclique », on entend que la chaine hydrocarbonée comporte dans sa structure un ou plusieurs cycles hydrocarbonés, pouvant être aromatique ou aliphatique, tel que des cycles ayant de 5 à 6 atomes de carbone ;
- par « monomère diisocyanate », on entend désigner tout composé isocyanate difonctionnel, c'est-à-dire comprenant deux groupes (ou fonctions) isocyanate NCO, aliphatique ou aromatique, utilisé comme réactif dans la synthèse d'un polyuréthane, et présentant une masse molaire inférieure à 300 g/mol, et notamment allant de 100 à 270 g/mol.

### Polyuréthane a) :

Le polyuréthane utilisé selon l'invention présente de préférence une viscosité allant de 10 000 à 100 000 mPa.s (millipascal seconde) à 23°C, et plus préférentiellement une viscosité inférieure à 50 000 mPa.s.

Cette viscosité peut être mesurée à l'aide d'un viscosimètre Brookfield selon la norme ISO 2555. Typiquement, la mesure peut se faire à 23°C, à l'aide d'un viscosimètre Brookfield RVT, avec une aiguille numéro 6 à une vitesse de rotation de 20 tours par minute (tr/mn).

Le(s) diisocyanate(s) utilisable(s) pour préparer le polyuréthane utilisé selon l'invention peu(ven)t être choisi(s) parmi les diisocyanates aliphatiques ou aromatiques suivants, et leur mélange :
a1) l'isophorone diisocyanate (IPDI) (dont le pourcentage en poids de groupe isocyanate est égale à 38% en poids environ par rapport au poids d'IPDI),
a2) le 2,4-toluène diisocyanate (2,4-TDI) (dont le pourcentage en poids de groupe isocyanate est égale à 48% en poids environ par rapport au poids de 2,4-TDI),
a3) le 2,4'-diisocyanate de diphényleméthane (2,4'-MDI) (dont le pourcentage en poids de groupe isocyanate est égale à 34% en poids environ par rapport au poids de 2,4'-MDI),
a4) un dérivé d'allophanate de l'hexaméthylène diisocyanate (HDI) de formule (I) telle que décrite ci-dessus, dans laquelle p, q, R et R³ sont choisis tel que le dérivé d'allophanate de HDI de formule (I) comprend une teneur en groupe isocyanate NCO allant de 12 à 14% en poids par rapport au poids dudit dérivé.

De préférence, le(s) diisocyanate(s) utilisable(s) pour préparer le polyuréthane utilisé selon l'invention est (sont) choisi(s) parmi les diisocyanates suivants, et leur mélange :
a1) l'isophorone diisocyanate (IPDI),
a2) le 2,4-toluène diisocyanate (2,4-TDI),
a4) un dérivé d'allophanate de l'hexaméthylène diisocyanate (HDI) de formule (I) telle que décrite ci-dessus, dans laquelle :
   - p est un nombre entier allant de 1 à 2 ;
   - q est un nombre entier allant de 2 à 5 ;
   - R représente une chaine hydrocarbonée, saturée ou insaturée, cyclique ou acyclique, linéaire ou ramifiée, comprenant de 6 à 14 atomes de carbone ;
   - R³ représente un groupe divalent propylène ;
   - p, q, R et R³ sont choisis tel que le dérivé d'allophanate de HDI de formule (I) comprend une teneur en groupe isocyanate allant de 12 à 14% en poids par rapport au poids dudit dérivé.

Le(s) diisocyanate(s) utilisable(s) pour préparer le polyuréthane utilisé selon l'invention (cités en a2, a3 et a4 ci-dessus) peu(ven)t être mis en oeuvre sous la forme d'une mélange contenant essentiellement le(s)dit(s) diisocyanate(s) et une faible teneur en composé(s) diisocyanate(s) résiduel(s) issu(s) de la synthèse dudit (desdits) diisocyanate(s). La teneur en composé(s) diisocyanate(s) résiduel(s) tolérée (correspondant aux isomères du 2,4-TDI, du 2,4'-MDI et au HDI respectivement) est telle que la mise en oeuvre dudit mélange dans la préparation du polyuréthane selon l'invention n'a pas d'impact sur les propriétés finale du polyuréthane.

Par exemple, le(s) diisocyanate(s) utilisable(s) pour préparer le polyuréthane utilisé selon l'invention (cités en a2, a3 et a4 ci-dessus) peu(ven)t être mis en oeuvre sous la forme d'un mélange contenant au moins 99% en poids de diisocyanate(s) et moins de 1% en poids de composé(s) diisocyanate(s) résiduel(s), de préférence sous la forme d'un mélange contenant au moins 99,5% en poids de diisocyanate(s) et moins de 0,5% en poids de composé(s) diisocyanate(s) résiduel(s), plus préférentiellement sous la forme d'un mélange contenant au moins 99,8% en poids de diisocyanate(s) et moins de 0,2% en poids de composé(s) diisocyanate(s) résiduel(s), par rapport au poids dudit mélange.

De préférence, la teneur en monomère diisocyanate résiduel est telle que la teneur pondérale en groupe isocyanate dans ledit mélange reste environ égale à celle indiquée ci-dessus par rapport au poids du diisocyanate a2, a3 et a4 seul.

Ainsi, le 2,4-TDI tel que cité en a2) peut être mis en oeuvre sous la forme d'un TDI technique, disponible commercialement, correspondant à une composition dont la teneur en 2,4-TDI est d'au moins 99% en poids, et de préférence d'au moins 99,5% en poids, par rapport au poids de ladite composition.

Le 2,4'-MDI tel que cité en a3) peut-être mis en oeuvre sous la forme d'un MDI technique, disponible commercialement, correspondant à une composition dont la teneur en 2,4'-MDI est d'au moins 99% en poids, et de préférence d'au moins 99,5% en poids, par rapport au poids de ladite composition.

Le dérivé d'allophanate de HDI de formule (I) tel que cité en a4) peut-être mis en oeuvre sous la forme d'une composition dans laquelle il est compris à raison d'au moins 99,5% en poids, de préférence au moins 99,8% en poids, ladite composition comprenant moins de 0,5% en poids de HDI, de préférence moins de 0,2% en poids de HDI, par rapport au poids total de ladite composition. Une telle composition peut être obtenue par exemple par:
- réaction de carbamatation allant de 80 à 100°C d'un mono alcool saturé ou insaturé, acyclique, linéaire ou ramifié, comprenant de 1 à 20 atomes de carbone, et oxyalkylé dont la partie alkylène est linéaire ou ramifiée et comprend de 1 à 4 atomes de carbone, avec un premier monomère de HDI, dans un rapport molaire NCO/OH supérieur à 2, avantageusement supérieur à 4, de préférence supérieur à 8, puis
- réaction d'allophanatation à une température allant de 100 à 180°C, de préférence autour de 140°C, du composé carbamate obtenu avec un deuxième monomère de HDI, dans un rapport molaire NCO/OH compris de 5 à 20, et
- distillation des monomères de HDI non réagis, afin d'obtenir un réactif comprenant moins de 0,5% en poids de HDI, de préférence moins de 0,2% en poids de HDI.

Selon un premier mode de réalisation préféré, le(s) diisocyanate(s) utilisable(s) pour préparer le polyuréthane utilisé selon l'invention est (sont) choisi(s) parmi les diisocyanates aliphatiques ou aromatiques cités en a1), a2) et a3) dans l'un quelconque des paragraphes ci-dessus, seuls ou en mélange.

Selon un deuxième mode de réalisation préféré, le(s) diisocyanate(s) utilisable(s) pour préparer le polyuréthane utilisé selon l'invention est (sont) choisi(s) parmi les diisocyanates aliphatiques cités en a4) dans l'un quelconque des paragraphes ci-dessus, seuls ou en mélange.

Les diisocyanates utilisables pour préparer le polyuréthane utilisé selon l'invention sont largement disponibles dans le commerce. A titre d'exemple, on peut citer le « Scuranate® T100 » commercialisé par la société Vencorex, correspondant à un 2,4-TDI de pureté supérieure à 99% en poids, le « Desmodur® I » commercialisé par la société Bayer, correspondant à un IPDI, ou encore ceux de la série des « Tolonate® » commercialisés par la société Vencorex, tel que le «Tolonate® X FLO 100 » correspondant à une composition comprenant au moins 99,5% en poids de dérivé d'allophanate de HDI de formule (I) et moins de 0,5% en poids de HDI par rapport au poids de ladite composition.

Le(s) polyéther diol(s) utilisable(s) selon l'invention peu(ven)t être choisi(s) parmi ceux dont la masse molaire moyenne en nombre va de 2000 à 12000 g/mol, de préférence de 3500 à 8500 g/mol, et plus préférentiellement de 3500 à 6000 g/mol. L'utilisation de tels polyéther diols conduit à un polyuréthane présentant généralement une masse molaire moyenne en nombre allant de 3000 à 21000 g/mol, de préférence 4600 à 16800 g/mol, et mieux encore de 4600 à 14000 g/mol. De tels polyéther diols sont de préférence linéaires.

De préférence, le(s) polyéther diol(s) utilisable(s) selon l'invention est (sont) choisi(s) parmi les polyoxyalkylène diols, dont la partie alkylène, linéaire ou ramifiée, comprend de 2 à 4 atomes de carbone, préférentiellement 3 atomes de carbone tel que le polyoxypropylène diol.

De préférence, le(s) polyéther diol(s) utilisable(s) selon l'invention présente(nt) un indice hydroxyle (IOH) allant de 9 à 56 mg KOH/g, et de préférence de 13 à 32 mg KOH/g et plus préférentiellement de 18 à 32 mg KOH/g. L'indice hydroxyle représente ici le nombre de fonctions hydroxyles par gramme de polyéther diol et est exprimé dans le texte de la présente demande sous la forme du nombre équivalent de milligrammes de potasse (KOH) utilisés dans le dosage des fonctions hydroxyles.

De préférence, le(s) polyéther diol(s) utilisable(s) selon l'invention présente(nt) un indice de polymolécularité (Ip) allant de 1 à 1,4 et de préférence de 1 à 1,2. Plus préférentiellement, on utilise du polyoxypropylène diol avec un indice de polymolécularité allant de 1 à 1,4 et de préférence de 1 à 1,2. Cet indice correspond au rapport de la masse molaire moyenne en poids à la masse molaire moyenne en nombre du diol (Ip =Mw/Mn) déterminées par GPC.

De tels polyéther diols sont commercialisés sous la dénomination « Acclaim® » par la société Bayer, tels que l' « Acclaim® 12200 » de masse molaire moyenne en nombre voisine de 11335 g/mol et dont l'indice hydroxyle va de 9 à 11 mg KOH/g, l'« Acclaim® 8200 » de masse molaire moyenne en nombre voisine de 8057 g/mol et dont l'indice hydroxyle va de 13 à 15 mg KOH/g, et l'« Acclaim® 4200 » de masse molaire moyenne en nombre voisine de 4020 g/mol, et dont l'indice hydroxyle va de 26,5 à 29,5 mg KOH/g.

Par ailleurs, les polyéther diols utilisables selon l'invention peuvent être obtenus, de façon connue, par polymérisation de l'oxyde d'alkylène correspondant en présence d'un catalyseur à base d'un double complexe métal-cyanure.

Le polyuréthane utilisé selon l'invention est susceptible d'être obtenu par le procédé de préparation tel que décrit précédemment.

Selon un premier mode de réalisation, le polyuréthane utilisé selon l'invention est susceptible d'être obtenu par polyaddition d'au moins un diisocyanate aromatique ou aliphatique choisi parmi ceux cités en a1), a2) et a3) dans l'un quelconque des paragraphes ci-dessus avec un polyéther diol, de préférence tel que décrit dans l'un quelconque des paragraphes précédents, en présence ou non d'au moins un catalyseur de réaction, à une température de réaction T1 inférieure 95°C et de préférence allant de 65°C à 80°C, dans des conditions anhydres, et dans des quantités de diisocyanate(s) et de polyéther diol conduisant à un rapport molaire NCO/OH, noté r₁, allant de 1,6 à 1,9, de préférence de 1,65 à 1,85.

Selon un deuxième mode de réalisation, le polyuréthane utilisé selon l'invention est susceptible d'être obtenu par polyaddition :
- d'au moins un diisocyanate aliphatique choisi parmi ceux cités en a4) dans l'un quelconque des paragraphes ci-dessus, mis en oeuvre sous la forme d'une composition dans laquelle il est compris à raison d'au moins 99,5% en poids, ladite composition comprenant moins de 0,5% en poids de HDI par rapport au poids total de ladite composition,
- avec un polyéther diol, de préférence tel que décrit dans l'un quelconque des paragraphes précédents,
en présence ou non d'au moins un catalyseur de réaction, à une température de réaction T1 inférieure 95°C et de préférence allant de 65°C à 80°C, dans des conditions anhydres, et dans des quantités de diisocyanate(s) et de polyéther diol conduisant à un rapport molaire NCO/OH, noté r₁, allant de 1,6 à 1,9, de préférence de 1,65 à 1,85.

De préférence, le polyuréthane utilisé selon l'invention est obtenu par polyaddition d'un ou deux diisocyanates aromatiques ou aliphatiques choisis parmi ceux cités en a1), a2), a3), a4), tels que décrits dans l'un quelconque des paragraphes précédents, avec un ou deux polyéther diols, de préférence tel que décrit dans l'un quelconque des paragraphes précédents, en présence ou non d'au moins un catalyseur de réaction, à une température de réaction T1 inférieure 95°C et de préférence allant de 65°C et 80°C, dans des conditions anhydres, et dans des quantités de diisocyanate(s) et de polyéther diol(s) conduisant à un rapport molaire NCO/OH, noté r₁, allant de 1,6 à 1,9, de préférence de 1,65 à 1,85.

De manière plus préférée, le polyuréthane utilisé selon l'invention est obtenu par polyaddition d'un diisocyanate aromatique ou aliphatique choisis parmi ceux cités en a1), a2), a3), a4), tel que décrit dans l'un quelconque des paragraphes précédents, avec un polyéther diol, de préférence tel que décrit dans l'un quelconque des paragraphes précédents, en présence ou non d'au moins un catalyseur de réaction, à une température de réaction T1 inférieure 95°C et de préférence allant de 65°C à 80°C, dans des conditions anhydres, et dans des quantités de diisocyanate et de polyéther diol conduisant à un rapport molaire NCO/OH, noté r₁, allant de 1,6 à 1,9, de préférence de 1,65 à 1,85.

La réaction entre le(s)dit(s) diisocyanate(s) et le(s)dit(s) polyéther diol(s) s'effectue de préférence à une température de réaction T1 allant de 65°C à 80°C, permettant d'obtenir dans des délais raisonnables le polyuréthane souhaité, notamment pour la transposition de la préparation du polyuréthane à l'échelle industrielle.

On entend par « rapport molaire NCO/OH », le rapport molaire du nombre de groupes isocyanates sur le nombre de groupes hydroxyles des réactifs diisocyanate et diol, utilisés pour la synthèse du polyuréthane.

L'ensemble des conditions d'obtention du polyuréthane utilisé selon l'invention susdécrites permet d'obtenir une concentration en monomère diisocyanate non réagi particulièrement basse en fin de réaction et un polyuréthane présentant les propriétés physicochimiques nécessaires à l'obtention, en combinaison avec les autres ingrédients cités en b) et c), d'une composition adhésive thermofusible réticulable à la chaleur et à l'humidité présentant des performances adhésives satisfaisantes.

La composition adhésive selon l'invention peut ainsi comprendre avantageusement moins de 0,5% en poids, de préférence moins de 0,3% en poids, de (chaque) monomère diisocyanate aliphatique (éventuellement présent dans la composition adhésive), et/ou moins de 0,1% en poids, de préférence moins de 0,06% en poids, de (chaque) monomère diisocyanate aromatique (éventuellement présent dans la composition adhésive), par rapport au poids total de la composition adhésive, selon que le polyuréthane utilisé selon l'invention ait été obtenu à partir de(s) diisocyanate(s) aromatique(s) et/ou aliphatique(s).

Le principe de la méthode d'analyse pour la détermination de la concentration en monomères diisocyanates libres repose sur la réaction spécifique du groupe isocyanate NCO avec une amine (1-(2-méthoxyphényl)pipérazine ou PPZ) pour former des dérivés stables d'urée. Ces dérivés sont obtenus lors de la préparation de l'échantillon d'adhésif par dilution/solubilisation de cet échantillon à l'aide d'une solution d'acétonitrile à 0,02 mol/L de PPZ. Les dérivés de PZZ formés à partir des isocyanates contenus dans l'échantillon à analyser sont ensuite dosés par un système de Chromatographie Liquide Haute Performance (CLHP) à phase inversée en C18 avec un gradient de phase mobile comprenant un mélange d'eau et d'acétonitrile tamponné à l'aide d'une solution aqueuse de tétrabutylammonium bisulfate à 0,2% en poids, à un pH allant de 2 à 3, muni d'un détecteur Ultra-Violet (UV) fonctionnant à 254nm. Ces composés sont identifiés et quantifiés en comparant leur temps de rétention et leur surface de pics chromatographiques avec ceux des dérivés PPZ étalons obtenus par réaction d'un monomère diisocyanate de nature et concentration connue.

La composition adhésive selon l'invention peut également présenter une teneur en groupe NCO (aussi désigné par « taux de NCO », noté % NCO) pouvant aller de 0,15 à 1,7% en poids, de préférence allant de 0,2 à 1,1% en poids, par rapport au poids total de la composition adhésive. Ces groupes isocyanates correspondent à ceux portés par le polyuréthane à terminaison NCO et ceux portés par les autres composés isocyanates présents dans la composition adhésive, tels que les monomères diisocyanates non réagis. Ce taux de NCO est calculable de manière bien connue par l'homme du métier et donne en première approximation une indication sur la capacité du polyuréthane présent dans la composition adhésive à réticuler ultérieurement au contact de l'humidité.

Lorsque ce taux est trop faible, le polyuréthane ne réticule pas suffisamment pour obtenir de bonnes propriétés adhésives. Lorsque ce taux est trop élevé, la composition adhésive réticulée est trop rigide et donc conduit une fois réticulée à un adhésif peu ou pas autocollant.

Selon un troisième mode de réalisation, le polyuréthane utilisé selon l'invention possède une masse molaire moyenne en nombre allant de 3000 à 21000 g/mol, et est susceptible d'être obtenu par polyaddition d'un diisocyanate aromatique ou aliphatique choisi parmi ceux cités en a1), a2), a3), a4, tel que décrit dans l'un quelconque des paragraphes précédents, avec un polyéther diol de masse molaire moyenne en nombre allant de 2000 à 12000 g/mol, choisi de préférence parmi les polyoxyalkylène diols, dont la partie alkylène, linéaire ou ramifiée, comprend de 2 à 4 atomes de carbone, préférentiellement 3 atomes de carbone tel que le polyoxypropylène diol, en présence ou non d'au moins un catalyseur de réaction, à une température de réaction T1 inférieure 95°C et de préférence allant de 65°C à 80°C, dans des conditions anhydres, et dans des quantités de diisocyanate et de polyéther diol conduisant à un rapport molaire NCO/OH, noté r₁, allant de 1,6 à 1,9.

Selon une variante préférée de ce troisième mode de réalisation, le polyuréthane utilisé selon l'invention possède une masse molaire moyenne en nombre allant de 4600 à 16800 g/mol, et est susceptible d'être obtenu par polyaddition d'un diisocyanate aromatique ou aliphatique choisi parmi ceux cités en a1), a2), a3), a4, tel que décrit dans l'un quelconque des paragraphes précédents, avec un polyéther diol de masse molaire moyenne en nombre allant de 3500 à 8500 g/mol, choisi de préférence parmi les polyoxyalkylène diols, dont la partie alkylène, linéaire ou ramifiée, comprend de 2 à 4 atomes de carbone, et mieux encore 3 atomes de carbone tel que le polyoxypropylène diol, en présence ou non d'au moins un catalyseur de réaction, à une température de réaction T1 inférieure 95°C et de préférence allant de 65°C à 80°C, dans des conditions anhydres, et dans des quantités de diisocyanate et de polyéther diol conduisant à un rapport molaire NCO/OH, noté r₁, allant de 1,6 à 1,9.

Selon une variante davantage préférée de ce troisième mode de réalisation, le polyuréthane utilisé selon l'invention possède une masse molaire moyenne en nombre allant de 4600 à 14000 g/mol, et est susceptible d'être obtenu par polyaddition d'un diisocyanate aromatique ou aliphatique tel que décrit dans l'un quelconque des paragraphes précédents, avec un polyéther diol de masse molaire moyenne en nombre allant de 3500 à 6000 g/mol, choisi de préférence parmi les polyoxyalkylène diols, dont la partie alkylène, linéaire ou ramifiée, comprend de 2 à 4 atomes de carbone, préférentiellement 3 atomes de carbone tel que le polyoxypropylène diol, en présence ou non d'au moins un catalyseur de réaction, à une température de réaction T1 inférieure 95°C et de préférence allant de 65°C à 80°C, dans des conditions anhydres, et dans des quantités de diisocyanate et de polyéther diol conduisant à un rapport molaire NCO/OH, noté r₁, allant de 1,6 à 1,9.

Le polyuréthane utilisé selon l'invention susceptible d'être obtenu selon ce troisième mode de réalisation, peut être représenté par la formule (II) suivante : 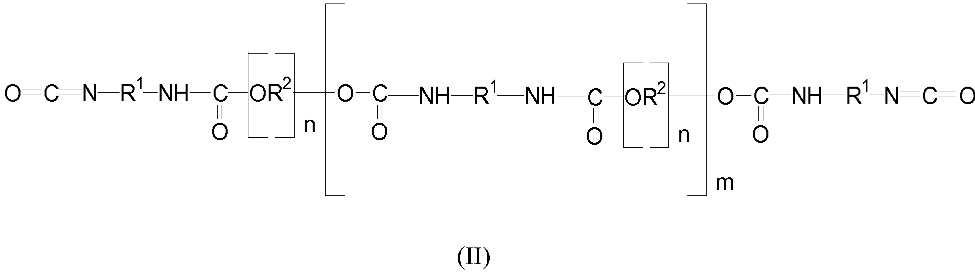 dans laquelle :
- R¹ représente un groupe divalent choisi parmi l'un des groupes divalents aliphatiques ou aromatiques suivants, correspondant respectivement aux diisocyanates aliphatiques ou aromatiques cités en a1), a2), a3) et a4) précédemment :
   a1') le groupe divalent dérivé de l'isophorone diisocyanate (IPDI) : 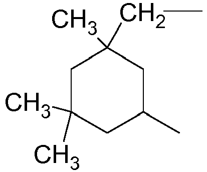
   a2') le groupe divalent dérivé du 2,4-toluène diisocyanate (2,4-TDI) : 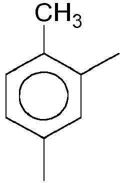
   a3') le groupe divalent dérivé du 2,4'-diisocyanate de diphényleméthane (2,4'-MDI) : 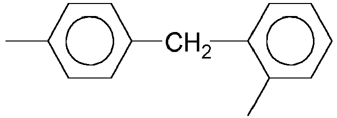
   a4') le groupe divalent dérivé d'un allophanate d'hexaméthylène diisocyanate (HDI) de formule suivante (III) : 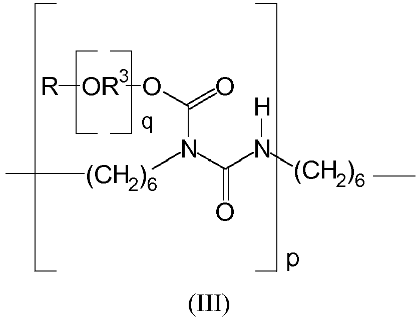 dans laquelle :
      - p est un nombre entier allant de 1 à 2 ;
      - q est un nombre entier allant de 0 à 9, et de préférence de 2 à 5 ;
      - R représente une chaine hydrocarbonée, saturée ou insaturée, cyclique ou acyclique, linéaire ou ramifiée, comprenant de 1 à 20 atomes de carbone, de préférence de 6 à 14 atomes de carbone ;
      - R³ représente un groupe divalent alkylène, linéaire ou ramifié, ayant de 2 à 4 atomes de carbone; et de préférence, un groupe divalent propylène ;
- R² identique ou différent de R³, représente un groupe divalent alkylène, linéaire ou ramifié, ayant de 2 à 4 atomes de carbones; et de préférence, un groupe divalent propylène ;
- n est un nombre entier non nul tel que la masse molaire moyenne en nombre du bloc polyéther de formule -[OR²]ₙ- va de 2000 à 12000 g/mol, et de préférence de 3500 à 8500 g/mol, et mieux encore de 3500 à 6000 g/mol ;
- m est un nombre entier tel que la masse molaire moyenne en nombre du polyuréthane va de 3000 à 21000 g/mol, de préférence 4600 à 16800 g/mol, et mieux encore de 4600 à 14000 g/mol.

En particulier, R¹ peut représenter un groupe divalent choisi parmi l'un des groupes divalents aliphatiques ou aromatiques suivants :
a1') le groupe divalent dérivé de l'isophorone diisocyanate (IPDI),
a2') le groupe divalent dérivé du 2,4-toluène diisocyanate (2,4-TDI),
a3') le groupe divalent dérivé du 2,4'-diisocyanate de diphényleméthane (2,4'-MDI),
a4') le groupe divalent dérivé d'un allophanate d'hexaméthylène diisocyanate (HDI) de formule (III) dans laquelle :
   - p est un nombre entier allant de 1 à 2 ;
   - q est un nombre entier allant de 0 à 9, et de préférence de 2 à 5 ;
   - R représente une chaine hydrocarbonée, saturée ou insaturée, cyclique ou acyclique, linéaire ou ramifiée, comprenant de 1 à 20 atomes de carbone, de préférence de 6 à 14 atomes de carbone ;
   - R³ représente un groupe divalent alkylène, linéaire ou ramifié, ayant de 2 à 4 atomes de carbone; et de préférence, un groupe divalent propylène ;
   - p, q, R et R³ sont choisis tel que le dérivé d'allophanate de HDI correspondant de formule (I) comprend une teneur en groupe isocyanate allant de 12 à 14% en poids par rapport au poids total dudit dérivé.

De préférence, R¹ représente un groupe divalent choisi parmi l'un des groupes divalents aliphatiques ou aromatiques suivants :
a1') le groupe divalent dérivé de l'isophorone diisocyanate (IPDI),
a2') le groupe divalent dérivé du 2,4-toluène diisocyanate (2,4-TDI),
a3') le groupe divalent dérivé du 2,4'-diisocyanate de diphényleméthane (2,4'-MDI),
a4') le groupe divalent dérivé d'un allophanate d'hexaméthylène diisocyanate (HDI) de formule (III) dans laquelle :
   - p est un nombre entier allant de 1 à 2 ;
   - q est un nombre entier allant de 2 à 5 ;
   - R représente une chaine hydrocarbonée, saturée ou insaturée, cyclique ou acyclique, linéaire ou ramifiée, comprenant de 6 à 14 atomes de carbone ;
   - R³ représente un groupe divalent propylène ;
   - p, q, R et R³ sont choisis tel que le dérivé d'allophanate de HDI correspondant de formule (I) comprend une teneur en groupe isocyanate allant de 12 à 14% en poids par rapport au poids total dudit dérivé.

Le(s) catalyseur(s) de réaction utilisable(s) peu(ven)t être tout catalyseur connu par l'homme du métier pour catalyser la formation de polyuréthane par réaction d'au moins un diisocyanate et d'au moins un polyéther diol, sous réserve de ne pas catalyser la réaction entre la fonction hydroxyle de la résine tackifiante phénolique et les groupes isocyanates du polyuréthane à terminaison NCO.

De préférence, on utilise un ou plusieurs catalyseurs choisis parmi les catalyseurs ne présentant pas ou peu de risque de toxicité. En particulier, le ou les catalyseurs de réaction sont choisis parmi :
- les dérivés organométalliques du bismuth, tel que le néodécanoate de bismuth vendu sous la dénomination « Borchikat®315 » par la société OM Group, le carboxylate de bismuth vendu sous la dénomination « K-KAT® XC B221 » par la société King Industries,
- les dérivés organométalliques de l'étain autres que le dibutyl dilaurate d'étain, tel que par exemple le dioctyl dilaurate d'étain (DOTL) tel que vendu sous la dénomination « TIB® KAT 217 » par la société « TIB Chemical »,
- les dérivés organométalliques du zinc, tel que le carboxylate de zinc vendu sous la dénomination « Borchikat®22 » par la société OM Group,
- les dérivés organométalliques du titane, tel que le tétrabutylate de titane Ti(OCH₂CH₂CH₂CH₃)₄, l'éthylacétoacétate de titane vendu sous la dénomination « Tyzor® PITA » par la société Dupont,
- les dérivés organométalliques du zirconium, tel que le chélate de zirconium vendu sous la dénomination « K-KAT® A209 », l'acétylacétonate de zirconium (Zr(acac)₄), et le tétraéthanolate de zirconium Zr(OCH₂CH₃)₄, et
- leur mélange.

Une quantité allant jusque 0,3% en poids de catalyseur(s) de réaction peut être présente dans la composition adhésive. En particulier, on préfère utiliser de 0,02 à 0,3% en poids de catalyseur(s) de réaction par rapport au poids total de la composition adhésive.

### Résine tackifiante b):

Par « résine tackifiante compatible », on entend désigner une résine tackifiante qui, lorsqu'elle est mélangée dans les proportions 50% / 50% en poids avec le polyuréthane utilisé selon l'invention, donne un mélange substantiellement homogène. En particulier, le mélange reste transparent (dans le spectre de la lumière visible - longueur d'onde allant de 380 à 780 nanomètre, mesuré dans le vide) et aucun(e) déphasage ou gélification totale ou partielle n'est observé(e) dans le mélange polyuréthane/résine.

De préférence, la (ou les) résine(s) tackifiante(s) compatible(s) utilisable(s) selon l'invention possède(nt) une température de ramollissement allant de 70°C à 150°C, de préférence allant de 75°C à 130°C.

De préférence, la composition adhésive selon l'invention comprend une résine tackifiante compatible susceptible(s) d'être obtenue(s) par le procédé b1) ou b2) tel que défini précédemment.

### Résine tackifiante b1):

La (ou les) résine(s) tackifiante(s) compatible(s) susceptible(s) d'être obtenue(s) par le procédé b1) tel que défini précédemment peu(ven)t présenter une température de transition vitreuse allant de 50°C à 110°C, de préférence allant de 55°C à 90°C, et plus préférentiellement allant de 60°C à 85°C.

La (ou les) résine(s) tackifiante(s) compatible(s) susceptible(s) d'être obtenue(s) par le procédé b1) tel que défini précédemment peu(ven)t présenter une température de ramollissement allant de 100°C à 125°C, de préférence de 110°C à 125°C, et plus préférentiellement de 115°C à 120°C.

La température (ou point) de ramollissement de la résine peut être déterminée conformément au test normalisé ASTM E 28 dont le principe est le suivant. Un anneau en laiton de diamètre environ 2 cm est rempli de la résine à tester à l'état fondu. Après refroidissement à température ambiante, l'anneau et la résine solide sont placés horizontalement dans un bain de glycérine thermostaté dont la température peut varier de 5°C par minute. Une bille d'acier de diamètre environ 9,5 mm est centrée sur le disque de résine solide. La température de ramollissement est, durant la phase de montée en température du bain à raison de 5°C par minute, la température à laquelle le disque de résine flue d'une hauteur de 25,4 mm sous le poids de la bille.

La (ou les) résine(s) tackifiante(s) compatible(s) susceptible(s) d'être obtenue(s) par le procédé b1) tel que défini précédemment peut présenter une masse molaire en nombre Mn allant de 470 à 700 Da, de préférence de 500 à 600 Da.

La (ou les) résine(s) tackifiante(s) compatible(s) susceptible(s) d'être obtenue(s) par le procédé b1) tel que défini précédemment peut comprendre un indice d'hydroxyle allant de 40 à 160 mg KOH/g, de préférence allant de 50 à 155 mg KOH/g, et plus préférentiellement de 90 à 150 mg KOH/g.

### Résine tackifiante b2):

On utilise de préférence une résine tackifiante compatible choisie parmi celles susceptibles d'être obtenues par le procédé b2), lorsqu'un catalyseur de réaction, tel que décrit précédemment par exemple, est utilisé pour préparer le polyuréthane utilisé selon l'invention.

La (ou les) résine(s) tackifiante(s) compatible(s) susceptible(s) d'être obtenue(s) par le procédé b2) tel que défini précédemment comprend (comprennent) de préférence une température de ramollissement allant de 75 à 120°C, plus préférentiellement de 90 à 110°C. Cette température de ramollissement peut être mesurée conformément au test normalisé ASTM E 28.

La (ou les) résine(s) tackifiante(s) compatible(s) susceptible(s) d'être obtenue(s) par le procédé b2) tel que défini précédemment peut comprendre une masse molaire moyenne en nombre allant de 650 à 1740 Da, de préférence de 650 à 1100 Da, plus préférentiellement de 750 à 1050 Da, et mieux encore de 950 à 1020 Da.

Selon une première variante, la (ou les) résine(s) tackifiante(s) compatible(s) susceptible(s) d'être obtenue(s) par le procédé b2) tel que défini précédemment peut comprendre un indice d'hydroxyle allant de 4 à 15 mg KOH/g.

Selon une deuxième variante, la (ou les) résine(s) tackifiante(s) compatible(s) susceptible(s) d'être obtenue(s) par le procédé b2) tel que défini précédemment peut comprendre un indice d'hydroxyle allant de 25 à 50 mg KOH/g.

La (ou les) résine(s) tackifiante(s) compatible(s) susceptible(s) d'être obtenue(s) par le procédé b2) tel que défini précédemment peut comprendre un indice de polymolécularité allant de 1,2 à 1,8, de préférence allant de 1,4 à 1,7.

Les résines tackifiantes utilisables selon l'invention sont disponibles commercialement et parmi celles susceptibles d'être obtenues par l'un des procédés b1) et b2) définis ci-dessus, on peut citer les produits suivants :
- procédé b1) : « Dertophène® H150 » disponible auprès de société DRT avec masse molaire égale à environ 630 Da, ayant une température de ramollissement de 118°C et un indice d'hydroxyle allant de 135 à 150 mg KOH/g ;
- procédé b2) : « Sylvarez® 510 » disponible auprès de la société Arizona Chemical avec une masse molaire en nombre d'environ 1740 Da, une température de ramollissement de 95°C ; et « Sylvares® 525 » également disponible auprès de la société Arizona Chemical avec une masse molaire en nombre d'environ 1010 Da, une température de ramollissement de 75°C, et un indice d'hydroxyle de 4 mg KOH/g environ.

Selon un mode de réalisation particulièrement préféré, la composition adhésive selon l'invention comprend :
a) de 40 à 60% en poids d'un polyuréthane susceptible d'être obtenu par polyaddition de 2,4-TDI, avec un polyéther diol, en présence ou non d'au moins un catalyseur de réaction, à une température de réaction T1 inférieure 95°C et de préférence allant de 65°C à 80°C, dans des conditions anhydres, et dans des quantités de TDI et de polyéther diol conduisant à un rapport molaire NCO/OH, noté r₁, allant de 1,6 à 1,9, de préférence de 1,65 à 1,85 ;
b) de 39 à 59 % en poids d'une résine tackifiante compatible, de masse molaire moyenne en nombre allant de 200 Da à 5000 Da, et choisies parmi les résines susceptibles d'être obtenues par le procédé b2) ; et
c) de 0,01 à 1 % en poids d'au moins un catalyseur de réticulation, par rapport au poids total de la composition adhésive.

Selon une variante de ce mode de réalisation particulièrement préféré, la composition adhésive selon l'invention comprend :
a) de 40 à 60% en poids d'un polyuréthane de formule (II), dans laquelle :
   - R¹ représente le groupe divalent dérivé du 2,4-TDI,
   - R² représente le groupe divalent propylène,
   - n est un nombre entier non nul tel que la masse molaire moyenne en nombre du bloc polyéther de formule -[OR²]ₙ- va de 3500 à 8500 g/mol, et mieux encore de 3500 à 6000 g/mol,
   - m est un nombre entier tel que la masse molaire moyenne en nombre du polyuréthane va de 4600 à 16800 g/mol, et mieux encore de 4600 à 14000 g/mol;
b) de 39 à 59 % en poids d'une résine tackifiante compatible, de masse molaire moyenne en nombre allant de 200 Da à 5000 Da, et choisies parmi les résines susceptibles d'être obtenues par le procédé b2) ; et
c) de 0,01 à 1 % en poids d'au moins un catalyseur de réticulation,
   par rapport au poids total de la composition adhésive.

Les compositions adhésives telles que définies dans ces modes de réalisation particulièrement préférés de l'invention, permettent, une fois enduite sur une couche support, par exemple polymérique, puis réticulée à l'humidité et par chauffage, d'obtenir un joint adhésif sensible à la pression particulièrement adhérent et résistant à la rupture. En effet, lorsque le joint adhésif est collé sur un substrat, puis soumis à une force de décollement, celui-ci se détache sans se rompre. Il y a « rupture adhésive » du joint adhésif par rapport au substrat. La résistance à la rupture peut être évaluée par des tests standards d'adhérence, tel que ceux décrits dans les exemples de la présente demande, sur divers substrats comme par exemple du verre, du métal, etc.

### Catalyseur de réticulation c) :

Le (ou les) catalyseur(s) de réticulation utilisé(s) dans la composition adhésive selon l'invention peut être tout catalyseur connu par l'homme du métier pour catalyser la formation d'urée par réaction d'un diisocyanate en présence d'eau (humidité). De préférence, ces catalyseurs sont choisis parmi des catalyseurs ne contenant pas d'étain. On peut utiliser par exemple un ou plusieurs catalyseurs aminés tertiaires tels que :
- le 1,8-diazabicyclo[5.4.0]undec-7-ène (DBU) 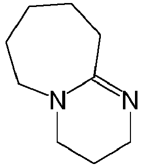
- le 1,5-diazabicyclo[4.3.0]non-5-ène (DBN) 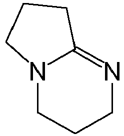
- l'éther diéthylique-2,2'-morpholine (DMDEE) 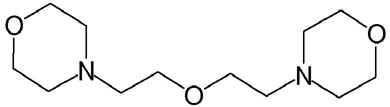
- le 1,4-diazabicyclo[2.2.2]octane (DABCO)

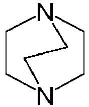

Ces catalyseurs de réticulation présentent l'avantage de ne pas être cancérogènes, mutagènes et reprotoxiques (CMR). Parmi ces catalyseurs de réticulation, on utilise de préférence le DBU.

Une quantité de 0,1 à 2 % d'un ou plusieurs stabilisants (ou anti-oxydant) peut en outre être incluse par exemple dans la composition adhésive selon l'invention. Ces composés sont introduits pour protéger la composition d'une dégradation résultant d'une réaction avec de l'oxygène qui est susceptible de se former par action de la chaleur, de la lumière ou de catalyseurs résiduels sur certaines matières premières telles que les résines tackifiantes. Ces composés peuvent inclure des anti-oxydants primaires qui piègent les radicaux libres et sont généralement des composés phénoliques primaires stériquement encombrés substitués par des groupes méthyle et/ou terbutyle comme l'« Irganox®1076 » de BASF (octadécyl-3-(3,5-di-terbutyl-4-hydroxyphényl)-propionate), l'« Irganox®1010 » de BASF (pentaerythritol tétrakis (3-(3,5-di-tert-butyl-4-hydroxyphényl)propionate), l'« Irganox®245 » de BASF (éthylène bis(oxyéthylène) bis-(3-(5-tert-butyl-4-hydroxy-m-tolyl)propionate). Les anti-oxydants primaires peuvent être utilisés seuls ou en combinaison avec d'autres anti-oxydants tels que des phosphites comme l'« Irgafos®168 » également de BASF (tris (2,4-di-terbutylphényl) phosphite), ou encore avec des stabilisants UV tels que des amines.

La composition adhésive selon l'invention peut aussi inclure un ou plusieurs additifs choisis de manière appropriée pour ne pas détériorer les propriétés de l'adhésif réticulé. On peut citer parmi les additifs utilisables, des pigments, des colorants et des charges. Ces additifs peuvent être choisis parmi ceux habituellement utilisés dans des compositions adhésives. En revanche, la composition adhésive selon l'invention ne comprend pas de préférence de polymères thermoplastiques tels que l'éthylène vinyl acétate (EVA), ni de plastifiant.

De préférence, la composition adhésive ne comprend pas de solvant organique de point d'ébullition inférieur à 250°C à pression atmosphérique, tel que de l'acétate d'éthyle, le xylène, le toluène, la N-méthyl-2-pyrrolidone (NMP).

Plus particulièrement, la composition adhésive est constituée de :
a) de 40 à 60% en poids d'au moins un polyuréthane tel que défini dans l'un quelconque des paragraphes précédents,
b) de 39 à 59% en poids d'au moins une résine tackifiante compatible telle que définie dans l'un quelconque des paragraphes précédents,
c) jusqu'à 0,3% en poids d'au moins un catalyseur de réaction,
d) de 0,01 à 1% en poids d'au moins un catalyseur de réticulation,
e) moins de 0,5% en poids de monomère(s) diisocyanate(s) aliphatique(s),
f) moins de 0,1% en poids de monomère(s) diisocyanate(s) aromatique(s),
g) moins de 2% en poids d'au moins un stabilisant ou antioxydant, et
h) éventuellement au moins un additif choisi parmi des pigments, des colorants et des charges.

Selon ce mode de réalisation préféré, la nature des composés a) à h) et leur teneur sont tels que définis dans l'un des paragraphes précédents. Ainsi, la teneur pondérale de (chaque) monomère(s) diisocyanate(s) aliphatique(s) éventuellement présent(s) dans la composition, à savoir l'IPDI et/ou le HDI, représente de préférence moins de 0,3% du poids de la composition, et la teneur pondérale de (chaque) monomère(s) diisocyanate(s) aromatique(s) éventuellement présent(s) dans la composition, à savoir le TDI et/ou le MDI, représente de préférence moins de 0,06% du poids de la composition.

Selon ce mode de réalisation préféré, la composition adhésive selon l'invention présente de préférence une viscosité allant de 1000 à 50 000 mPa.s à 100°C, et de préférence une viscosité allant de 4000 à 15 000 mPa.s à 100°C. Cette viscosité peut être mesurée à 100°C à l'aide d'un viscosimètre Brookfield RVT couplé avec un module chauffant de type Thermosel de la marque Brookfield, avec un mobile numéro 27 à une vitesse de rotation de 20 tours par minute.

Un autre objet de l'invention porte sur un procédé de préparation d'une composition adhésive selon l'invention, caractérisé en ce que le(s) polyuréthane(s) utilisé(s) selon l'invention est (sont) préparé(s) préalablement, puis mélangé(s) aux autres composés de la composition adhésive.

Selon une variante préférée selon l'invention, le procédé de préparation de la composition adhésive selon l'invention comprend dans l'ordre suivant :
(i) une étape de fonte de la ou les résines tackifiantes, le cas échéant en mélange avec un ou plusieurs stabilisants thermiques ou antioxydants, à une température T2,
(ii) une étape d'incorporation et de mélange à l'abri de l'air, sous atmosphère inerte, du ou des polyuréthanes,
(iii) une étape de refroidissement dudit mélange, à une température T3 inférieure à T2, puis,
(iv) une étape d'incorporation dans ledit mélange du ou des catalyseurs de réticulation, et le cas échéant, du ou des autres composés optionnels.

L'étape (i) a généralement lieu à une température T2 supérieure ou égale à la température de ramollissement de la résine tackifiante, et dans le cas d'un mélange de résine, à une température T2 supérieure ou égale à la plus grande des températures de ramollissement des résines utilisées. En particulier, la température T2 ne dépasse pas en outre 150°C, de préférence 130°C. De préférence, la température T2 est supérieure ou égale à la température de ramollissement de la résine tackifiante, et dans le cas d'un mélange de résine, à une température T2 supérieure ou égale à la plus grande des températures de ramollissement des résines utilisées, et va de 70°C à 150°C, plus préférentiellement de 75°C à 130°C.

Dans l'étape (ii), l'ajout du ou des polyuréthanes peut être réalisé de manière fractionnée. En effet, la quantité totale de polyuréthane(s) à introduire peut être fractionnée en autant de portions que nécessaire de manière à éviter qu'une baisse trop importante de la température du mélange liée à l'introduction d'un volume important en polyuréthane(s), ne fige le milieu réactionnel.

Entre chacune des étapes précédentes, on peut introduire une étape de déshydratation sous vide, notamment avant et après ajout du polyuréthane, de manière à travailler dans des conditions anhydres optimales. Chaque étape de déshydratation peut être réalisée sous une pression réduite de 10 à 50 millibars (mbar), pendant une durée allant d'une heure trente à trois heures et de préférence d'au moins deux heures.

L'étape (iii) a généralement lieu à une température T3 inférieure à la température de ramollissement de la résine tackifiante, et dans le cas d'un mélange de résines tackifiantes, à une température T3 inférieure à la plus grande des températures de ramollissement des résines utilisées. En particulier, la température T3 est par ailleurs d'au moins 45°C. De préférence, la température T3 est inférieure à la température de ramollissement de la résine tackifiante, et dans le cas d'un mélange de résines tackifiantes, à une température T3 inférieure à la plus grande des températures de ramollissement des résines utilisées, et va de 45°C à 90°C, plus préférentiellement de 70°C à 80°C.

La présente invention a également pour objet un support auto-adhésif susceptible d'être obtenu par un procédé comprenant les étapes suivantes :
(i') préchauffage à une température T4 de la composition adhésive telle que définie précédemment afin de la rendre liquide, puis
(ii') enduction de ladite composition adhésive sur une couche support, puis
(iii') réticulation de ladite composition adhésive par chauffage du support ainsi enduit à une température T5 allant de 70°C à 150°C, de préférence de 75°C à 130°C, en présence d'humidité (atmosphérique), et de préférence d'une humidité relative entre 40 et 70% à 23°C.

L'étape (i') a généralement lieu à une température T4 allant de 70°C à 150°C, plus préférentiellement de 75°C à 130°C.

L'étape (ii') d'enduction de la couche support est réalisée au moyen de dispositifs d'enduction connus, comme par exemple une buse à lèvre ou de type rideau, au rouleau ou un enducteur manuel également dénommé tire-film ou filmographe.

Elle met en oeuvre un grammage de composition adhésive allant de 20 à 100 g/m².

Le matériau utilisable pour la couche support est par exemple du papier ou un film d'un matériau polymère à une ou plusieurs couches. A titre d'exemple, on peut citer un support de PolyEthylèneTéréphtalate (PET).

Le temps nécessaire à la réticulation de l'étape (iii') peut varier dans de larges limites, par exemple entre 1 seconde et 15 minutes.

Cette étape de réticulation thermique combinée à une étape subséquente de réticulation en présence d'humidité (atmosphérique) (et de préférence d'une humidité relative entre 40 et 70% à 23°C), a pour effet la création - entre les chaînes polymériques du polyuréthane utilisé selon l'invention, et sous l'action de l'humidité (atmosphérique)- de liaisons de type urée qui conduisent à la formation d'un réseau polymérique tridimensionnel. La composition adhésive ainsi réticulée est un adhésif sensible à la pression qui confère à la couche support qui en est revêtue le pouvoir adhésif et le tack désirables.

Ainsi, un support de PET revêtu à raison d'un grammage de 50 g/m² présente une adhésion permanente sur un substrat d'acier inoxydable correspondant à un pouvoir adhésif (mesuré par le test de pelage à 180° sur acier inoxydable décrit ci-après) avantageusement supérieur à 2 N/cm, de préférence allant de 2 à 20 N/cm, en rupture cohésive ou adhésive, et plus préférentiellement en rupture adhésive. Le tack de ce même support à température ambiante (mesuré par le test d'adhésion instantanée de la boucle décrit ci-après) est avantageusement supérieur à 2 N/cm, de préférence allant de 2 à 35 N/cm, en rupture cohésive ou adhésive, et plus préférentiellement en rupture adhésive.

Les termes « rupture cohésive » et « rupture adhésive » représentent l'aspect du faciès de rupture après décollement du joint adhésif du substrat ou support. Par « rupture cohésive », on entend que la fracture de séparation entre les matériaux décollés est apparue au sein du joint de colle. Par « rupture adhésive », on entend que la fracture de séparation entre les matériaux décollés est apparue à l'extérieur du joint de colle, de manière à ce que l'adhésif reste collé à l'une des interfaces entre le joint de colle et l'un des matériaux assemblés par collage.

Enfin, le joint de colle formé après application sur un substrat de la couche support revêtue de la composition réticulée assure la fixation de ladite couche support dans un domaine de température allant de -60°C à +160°C.

Le support auto-adhésif selon l'invention peut également comprendre une couche anti-adhérente protectrice recouvrant la couche de PSA, ladite couche protectrice étant simplement contre-collée.

La présente invention concerne également l'utilisation du support auto-adhésif défini précédemment pour la fabrication d'étiquettes et/ou rubans auto-adhésifs.

Le grammage de composition adhésive nécessaire pour la fabrication d'étiquettes auto-adhésives peut aller de 20 à 100 g/m², de préférence autour de 50 g/m². Celui nécessaire pour la fabrication de rubans auto-adhésifs peut varier dans un domaine beaucoup plus large allant de 2 à 1000 g/m², de préférence de 15 à 250 g/m².

Les exemples suivants sont donnés à titre purement illustratif de l'invention et ne sauraient être interprétés pour en limiter la portée.

Les exemples 1 à 7 illustrent la préparation d'un polyuréthane utilisé selon l'invention.

Les exemples 1A à 7A illustrent des compositions adhésives selon l'invention comprenant le polyuréthane obtenu aux exemples 1 à 7 respectivement.

Les exemples 8A à 10A correspondent à des compositions comparatives (noté par l'abréviation comp) comprenant le polyuréthane obtenu à l'exemple 3, mais une résine tackifiante différente de celle utilisée selon l'invention :
- « Kristalex® F100 » = polymère d'alpha-méthyl styrène hydrogénée, vendu par la société Eastman Chemical, ayant une température de ramollissement de 99°C,
- « Sylvalite® RE 105 XL » = ester de colophane, vendu par la société Arizona Chemical, ayant une température de ramollissement de 105°C,
- « Acrynax® 4326 » = résine acrylique, vendue par la société Franklin Adhesives & Polymers, ayant une température de ramollissement allant de 70°C à 80°C.

L'exemple 11A correspond à une composition adhésive préparée selon l'art antérieur (exemple 2 de la demande WO 0043432).
- « Kristalex®3085 » = résine hydrocarbonée d'alpha-méthyl styrène, vendue par la société Eastman Chemical, ayant une température de ramollissement allant de 70°C à 80°C.

### Exemples 1 à 7 : Préparation des polyuréthanes

Les polyuréthanes 1 à 7 des exemples 1 à 7 ont été préparés de la même manière à l'aide des différents ingrédients figurant dans le tableau 1. Les quantités de diisocyanate et de diol utilisés correspondent à un ratio molaire NCO/OH de allant de 1,7 à 1,8 environ.

Les quantités indiquées dans le tableau 1 sont exprimées en grammes.

### Protocole expérimental :

Le diisocyanate et le diol, et le cas échéant le catalyseur de réaction, sont mélangés dans un réacteur maintenu sous agitation constante et sous azote, à une température T1 allant de 72 à 80°C. La température est contrôlée de manière à ne pas dépasser 80°C.

Le taux d'avancement de la réaction est contrôlé en mesurant le taux de NCO par un dosage de dibutylamine en retour, à l'aide d'acide chlorhydrique selon la norme NF T52-132. La réaction est stoppée lorsque le « taux de NCO » mesuré est environ égal au taux de NCO souhaité.

**Tableau 1**

| Ingrédients du polyuréthane | 1 | 2 | 3 | 4 | 5 | 6 | 7 |
|---|---|---|---|---|---|---|---|
| Acclaim®8200 | - | 750 | - | - | - | - | - |
| Acclaim® 4200 | 929 | - | 929 | 912 | 912 | 929 | 412 |
| Scuranate® T100 | 71 | 28 | 71 | - | - | 71 | - |
| Tolonate®X FLO 100 | - | - | - | - | - | - | 118 |
| IPDI | - | - | - | 88 | 88 | - | - |
| Borchikat®315 | - | - | 0,1 | 0,1 | 0,1 | - | 0,05 |
| TIB Kat®217 | - | - | - | - | - | 0,1 | - |

### Caractérisation :

Pour chacun des polyuréthanes des exemples 1 à 7 obtenus :
- le taux de NCO dans le milieu de synthèse du polyuréthane est dosé selon la norme NF T52-132. Les valeurs mesurées sont exprimées en pourcentage en poids par rapport à un échantillon de 100 g, sont ensuite rapportées sur le poids total de la composition adhésive et sont consignées dans le tableau 4.
- la teneur pondérale en monomère diisocyanate non réagi présent dans le milieu de synthèse du polyuréthane est mesurée par une méthode d'HPLC muni d'un détecteur UV tel que décrit précédemment (phase inversée en C18, phase mobile : solution aqueuse d'acétonitrile, tamponnée avec une solution aqueuse à 0,2% en poids de bisulfate de tétrabutylammonium à pH égal à 2,5, longueur d'onde de détection : 254nm). Les valeurs mesurées sont exprimées en pourcentage en poids et sont ensuite rapportées sur le poids total de la composition adhésive et sont consignées dans le tableau 4.
- la viscosité du polyuréthane est estimée en mesurant à 23°C la viscosité du milieu de synthèse du polyuréthane en fin de réaction. Cette mesure est réalisée 24 heures après la fin de réaction (J+1) à 23°C, à l'aide d'un viscosimètre Brookfield RVT, avec une aiguille numéro 6 à une vitesse de rotation de 20 tours par minute (tr/mn). La valeur mesurée est exprimée en millipascal seconde (mPa.s) et est consignée dans le tableau 2.

**Tableau 2**

| Caractérisation du polyuréthane | 1 | 2 | 3 | 4 | 5 | 6 | 7 |
|---|---|---|---|---|---|---|---|
| Viscosité à 23°C (mPa.s) | 8710 | 10800 | 19500 | 25920 | 25920 | 18400 | 83400 |

### Exemples 1A à 10A : Préparation des compositions adhésives

Les compositions 1A à 10A ont été préparées de la même manière à l'aide des différents ingrédients figurant dans le tableau 3. En particulier, ces compositions ont été réalisées à partir des polyuréthanes des exemples 1 à 7 obtenus sans subir d'étape de purification ou de séparation du diisocyanate résiduel, non consommé par la réaction de synthèse du polyuréthane. En d'autres termes, ces compositions ont été réalisées à partir des polyuréthanes des exemples (notées 1 à 7) comprenant le monomère diisocyanate non réagi correspondant, lequel représente moins de 0,1% du poids du polyuréthane (pour les exemples 1-3 et 6) et moins de 0,5% en poids du polyuréthane (pour les exemples 4-5 et 7). Les concentrations en monomère diisocyanate non réagi ont été mesurées conformément à la méthode décrite plus haut dans la description.

Les quantités indiquées dans le tableau 3 sont exprimées en grammes.

### Protocole expérimental :

La composition 1A est préparée en introduisant tout d'abord la résine tackifiante et les antioxydants dans un réacteur en verre sous vide et chauffé à une température T2 supérieure ou égale à la température de ramollissement de la résine tackifiante et inférieure ou égale à 130°C. Puis, une fois la résine bien fondue, on coupe le vide et on introduit sous azote la moitié de la composition de polyuréthane obtenue dans l'exemple 1 précédent. Le mélange est maintenu à une température T2 telle que définie précédemment, sous agitation constante. Après addition, le mélange est laissé sous agitation sous vide durant au moins 2 heures, puis on coupe de nouveau le vide et on introduit sous azote l'autre moitié de la composition de polyuréthane 1 en maintenant le mélange sous agitation à une température T2 telle que définie précédemment. On refroidit ensuite le milieu à une température T3, à 80°C environ, on coupe le vide puis on introduit le catalyseur sous atmosphère d'azote sous vive agitation. Après addition, le vide est rétabli et le mélange est agité durant 10 minutes supplémentaires.

La composition obtenue est stockée dans une cartouche en aluminium préalablement séchée à l'étuve à 100°C et étanche à l'humidité.

Le protocole expérimental appliqué pour l'exemple 1A est reproduit de la même manière pour les exemples 2A à 10A en tenant compte du tableau 3.

**Tableau 3**

| Ingrédients de la composition adhésive | 1A | 2A | 3A | 4A | 5A | 6A | 7A | 8A (comp) | 9A (comp) | 10A (comp) |
|---|---|---|---|---|---|---|---|---|---|---|
| Polyuréthane 1 | 52,0 | - | - | - | - | - | - | - | - | - |
| Polyuréthane 2 | - | 52,1 | - | - | - | - | - | - | - | - |
| Polyuréthane 3 | - | - | 52,1 | - | - | - | - | 52,1 | 52,1 | 52,1 |
| Polyuréthane 4 | - | - | - | 52,1 | - | - | - | - | - | - |
| Polyuréthane 5 | - | - | - | - | 52,0 | - | - | - | - | - |
| Polyuréthane 6 | - | - | - | - | - | 52,0 | - | - | - | - |
| Polyuréthane 7 | - | - | - | - | - | - | 52,1 | | | |
| Dertophène®H150 | 46,8 | 47,1 | - | - | - | 46,8 | - | - | - | - |
| Sylvares®525 | - | - | 47,1 | 47,1 | 46,8 | - | 47,1 | - | - | - |
| Kristalex®F 100 | - | - | - | - | - | - | - | - | - | 47,1 |
| Sylvalite®RE105XL | - | - | - | - | - | - | - | 47,1 | - | - |
| Acrynax®4326 | - | - | - | - | - | - | - | - | 47,1 | - |
| DBU | 0,5 | 0,1 | 0,1 | 0,1 | 0,5 | 0,5 | 0,1 | 0,1 | 0,1 | 0,1 |
| Anti-oxydants | 0,7 | 0,7 | 0,7 | 0,7 | 0,7 | 0,7 | 0,7 | 0,7 | 0,7 | 0,7 |

### Caractérisations :

Les mesures suivantes sont réalisées de la même manière sur les différentes compositions adhésives 1A à 10A obtenues :
- La viscosité de la composition est mesurée à 100°C à l'aide d'un viscosimètre Brookfield RVT couplé avec un module chauffant de type Thermosel de la marque Brookfield, avec un mobile numéro 27 à une vitesse de rotation de 20 tours par minute. Cette viscosité est exprimée en millipascal.seconde.
- En outre, on a évalué visuellement l'aspect général de chaque composition (lumière visible). Les compositions 1A à 7A sont toutes transparentes. Pour les exemples comparatifs 9A et 10A, on a observé une gélification de la composition, résultant vraisemblablement d'une incompatibilité entre la résine tackifiante et le polyuréthane utilisés.

Les valeurs mesurées sont regroupées dans le tableau 4.

**Tableau 4**

| Caractérisations des compositions adhésives | 1A | 2A | 3A | 4A | 5A | 6A | 7A | 8A (comp) | 9A (comp) | 10A (comp) |
|---|---|---|---|---|---|---|---|---|---|---|
| Viscosité à 100°C (mPa.s) | 8350 | 6000 | 7000 | 3000 | 3700 | 9025 | 7000 | 6100 | gel | gel |
| % NCO (en % en poids de la composition adhésive) | 0,77 | 0,38 | 0,77 | 0,74 | 0,74 | 0,77 | 0,66 | 0,77 | 0,77 | 0,77 |
| Taux de monomère libre (% en poids de la composition adhésive) | 0,04 | 0,05 | 0,04 | 0,49 | 0,49 | 0,04 | 0,3 | 0,04 | 0,04 | 0,04 |

### Préparation d'une couche support PET revêtue de la composition adhésive réticulée, à raison de 50 g/m² :

On utilise comme couche support une feuille rectangulaire de PolyEthylèneTéréphtalate (PET) d'épaisseur 50 µm et de dimensions 20 cm sur 40 cm.

On préchauffe la composition 1A obtenue à une température T4 allant de 70°C à 150°C et de préférence de 100°C à 120°C et on l'introduit dans une cartouche d'où l'on extrude un cordon qui est déposé près du bord de la feuille parallèlement à sa largeur.

La composition renfermée dans ce cordon est ensuite répartie sur la totalité de la surface de la feuille, de manière à obtenir une couche uniforme et d'épaisseur sensiblement constante. On utilise pour cela un tire-film (également dénommé filmographe) qui est déplacé du bord de la feuille au bord opposé. On dépose ainsi une couche de composition correspondant à un grammage de 50 g/m², ce qui représente environ une épaisseur de l'ordre de 50 µm.

La feuille de PET ainsi revêtue est alors placée dans une étuve à une température T5 allant de 70°C à 150°C et de préférence de 100 à 120°C pendant 15 minutes environ, puis à 23 °C durant 7 jours à un taux d'humidité relative de 50%, pour réticulation de la composition.

La feuille est alors contrecollée sur une couche anti-adhérente protectrice consistant en une feuille de film siliconé, rectangulaire et de mêmes dimensions.

La couche support PET ainsi obtenue est soumise aux tests décrits ci-après.

Le protocole expérimental appliqué et les tests réalisés pour le système multicouche obtenu à l'aide de la composition 1A sont reproduits de la même manière pour les exemples 1A à 7A.

### Test de pelage à 180° sur plaque d'acier inoxydable :

Le pouvoir adhésif est évalué par le test de pelage (ou peel) à 180° sur plaque d'acier inoxydable tel que décrit dans la méthode FINAT n° 1, publiée dans le Manuel Technique FINAT 6ème édition, 2001. FINAT est la fédération internationale des fabricants et transformateurs d'étiquettes auto-adhésives. Le principe de ce test est le suivant.

Une éprouvette sous forme de bande rectangulaire (25 mm x 150 mm) est découpée dans la couche support PET revêtu de la composition réticulée obtenue précédemment. Cette éprouvette est fixée sur les 2/3 de sa longueur (après enlèvement de la portion de couche anti-adhérente protectrice correspondante), sur un substrat constitué d'une plaque d'acier inoxydable dégraissée, en appliquant deux passages d'un rouleau de 1 kilo. L'assemblage obtenu est laissé 15 minutes à température ambiante. Il est alors placé dans un appareil de traction capable, à partir de l'extrémité restée libre de la bande rectangulaire, d'effectuer le pelage ou décollement de la bande sous un angle de 180° et avec une vitesse de séparation de 300 mm par minute. L'appareil mesure la force requise pour décoller la bande dans ces conditions. Les résultats sont exprimés en newton par centimètre (N/cm) et sont indiqués dans le tableau 5 suivant.

Par ailleurs, on mesure le faciès de rupture visuellement, selon l'état des surfaces décollées. On note « RA » pour rupture adhésive, lorsque l'on observe que la totalité du joint adhésif est resté collé à la couche support PET. On note « RC » pour rupture cohésive, lorsque l'on observe que le joint adhésif a été rompu et est resté pour une partie collé à la couche support PET et pour l'autre partie collé au substrat. Les résultats sont indiqués dans le tableau 5.

### Test d'adhésion instantanée (également dénommé test de la boucle) :

Le pouvoir collant immédiat ou tack est évalué par le test d'adhésion instantanée dit de la boucle, décrit dans la méthode FINAT n° 9, dont le principe est le suivant.

Une éprouvette sous forme de bande rectangulaire (25 mm x 150 mm) est découpée dans la couche support PET revêtu de la composition réticulée obtenue précédemment. Après enlèvement de la totalité de la couche anti-adhérente protectrice, les 2 extrémités de cette bande sont jointes de manière à former une boucle dont la couche adhésive est orientée vers l'extérieur. Les 2 extrémités jointes sont placées dans la mâchoire mobile d'un appareil de traction capable d'imposer une vitesse de déplacement de 300 mm/minute selon un axe vertical avec possibilité d'aller et retour. La partie inférieure de la boucle placée en position verticale est d'abord mise en contact avec une plaque de verre horizontale de 25 mm sur 30 mm sur une zone carrée d'environ 25 mm de côté. Dès cette mise en contact, le sens de déplacement de la mâchoire est inversé. Le pouvoir collant immédiat est la valeur maximale de la force nécessaire pour que la boucle se décolle complètement de la plaque. Les résultats sont exprimés en newton par centimètre carré (N/cm²) et sont indiqués dans le tableau 5.

Par ailleurs, on mesure le faciès de rupture visuellement, selon l'état des surfaces décollées. On note « RA » pour rupture adhésive : en particulier, on observe que la totalité du joint adhésif est resté collé à la couche support PET. On note « RC » pour rupture cohésive : on observe que le joint adhésif a été rompu et est resté pour une partie collé à la couche support PET et pour l'autre partie collé au substrat. Les résultats sont indiqués dans le tableau 5.

**Tableau 5**

| Tests de la composition adhésive réticulée sur support | 1A | 2A | 3A | 4A | 5A | 6A | 7A | 8A (comp) | 9A (comp) | 10A (comp) |
|---|---|---|---|---|---|---|---|---|---|---|
| Peel 180° sur acier inoxydable (N/cm) | 11,81 RC | 3,26 RC | 9,45 RA | 18,50 RC | 10,24 RC | 10,24 RC | 6,30 RC | 0,55 RC | n.a. | n.a. |
| Adhésion instantanée de la boucle sur verre (N/cm²) | 12,40 RC | 4,82 RC | 6,05 RA | 2,12 RC | 11,94 RC | 12,87 RC | 7,44 RC | 1,24 RC | n.a. | n.a. |

| | | | | | | | | | | |
|---|---|---|---|---|---|---|---|---|---|---|
| n.a. : non applicable | | | | | | | | | | |

Ainsi, tous les adhésifs obtenus à partir des exemples 1A à 7A selon l'invention, conduisent à des performances adhésives satisfaisantes en termes de force d'adhésion et de tack. En outre, les valeurs obtenues à l'issue du test de pelage et à l'issu du test d'adhésion instantanée de la boucle sont strictement supérieures à 2N/cm et 2N/cm² respectivement, qui sont les valeurs minimales souhaitées pour obtenir un pouvoir auto-adhésif.

Pour l'exemple comparatif 8A, ces conditions cumulées ne sont pas remplies, et de fait l'adhésif obtenu est peu performant et ne convient pas comme auto-adhésif.

Pour les exemples 9A et 10A, la force d'adhésion et le pouvoir collant instantané n'ont pu être mesurés car la composition a gélifié.

## Revendications

1. Composition adhésive réticulable comprenant :
a) de 40 à 60 % en poids d'au moins un polyuréthane susceptible d'être obtenu par réaction de polyaddition :
d'au moins un diisocyanate aromatique ou aliphatique choisi parmi les diisocyanates suivants, et leur mélange :
a1) l'isophorone diisocyanate,
a2) le 2,4-toluène diisocyanate,
a3) le 2,4'-diisocyanate de diphényleméthane,
a4) un dérivé d'allophanate d'hexaméthylène diisocyanate de formule (I): 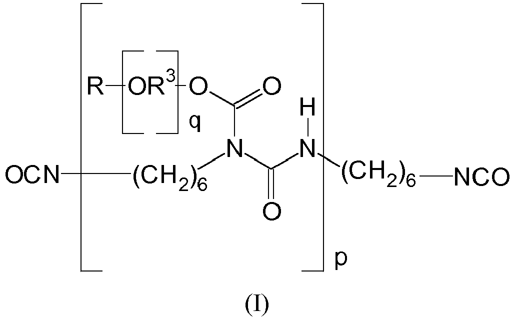 dans laquelle :
- p est un nombre entier allant de 1 à 2 ;
- q est un nombre entier allant de 0 à 9 ;
- R représente une chaine hydrocarbonée, saturée ou insaturée, cyclique ou acyclique, linéaire ou ramifiée, comprenant de 1 à 20 atomes de carbone ;
- R³ représente un groupe divalent alkylène, linéaire ou ramifié, ayant de 2 à 4 atomes de carbones ;
avec au moins un polyéther diol, en présence ou non d'au moins un catalyseur de réaction, à une température de réaction T1 inférieure à 95°C, dans des conditions anhydres, et dans des quantités de diisocyanate(s) et de polyéther diol(s) conduisant à un rapport molaire NCO/OH, noté r₁, allant de 1,6 à 1,9 ;
b) de 39 à 59 % en poids d'au moins une résine tackifiante compatible, de masse molaire moyenne en nombre allant de 200 Da à 5000 Da, et choisies parmi les résines susceptibles d'être obtenues par l'un des procédés suivants :
b1) polymérisation d'hydrocarbures terpéniques en présence de catalyseurs de Friedel-Crafts, suivie d'une réaction avec des phénols,
b2) polymérisation d'alpha-méthyl styrène, suivie d'une réaction avec des phénols; et
c) de 0,01 à 1 % en poids d'au moins un catalyseur de réticulation,
lesdits pourcentages étant exprimés en poids par rapport au poids total de la composition adhésive.

2. Composition adhésive selon la revendication 1, **caractérisée en ce que** le(s) diisocyanate(s) aromatique(s) ou aliphatique(s) est (sont) choisi(s) parmi les diisocyanates suivants, et leur mélange :
a1) l'isophorone diisocyanate (IPDI),
a2) le 2,4-toluène diisocyanate (2,4-TDI),
a4) un dérivé d'allophanate de l'hexaméthylène diisocyanate (HDI) de formule (I) telle que décrite dans la revendication 1, dans laquelle :
- p est un nombre entier allant de 1 à 2 ;
- q est un nombre entier allant de 2 à 5 ;
- R représente une chaine hydrocarbonée, saturée ou insaturée, cyclique ou acyclique, linéaire ou ramifiée, comprenant de 6 à 14 atomes de carbone ;
- R³ représente un groupe divalent propylène ;
- p, q, R et R³ sont choisis tel que le dérivé d'allophanate de HDI de formule (I) comprend une teneur en groupe isocyanate NCO allant de 12 à 14% en poids par rapport au poids dudit dérivé.

3. Composition adhésive selon la revendication 1 ou 2, **caractérisée en ce que** le dérivé d'allophanate de HDI de formule (I) défini dans la revendication 1 ou 2 est sous la forme d'une composition dans laquelle il est compris à raison d'au moins 99,5% en poids, ladite composition comprenant moins de 0,5% en poids de HDI par rapport au poids total de ladite composition.

4. Composition adhésive selon l'une quelconque des revendications précédentes, **caractérisée en ce que** le(s) polyéther diol(s) a (ont) une masse molaire moyenne en nombre allant de 2000 à 12000 g/mol.

5. Composition adhésive selon l'une quelconque des revendications précédentes, **caractérisée en ce que** le(s) polyéther diol(s) est (sont) choisi(s) parmi les polyoxyalkylène diols, dont la partie alkylène, linéaire ou ramifiée, comprend de 2 à 4 atomes de carbone.

6. Composition adhésive selon l'une quelconque des revendications précédentes, **caractérisée en ce que** le(s) polyéther diol(s) est (sont) choisi(s) parmi les polyoxypropylène diols avec un indice de polymolécularité allant de 1 à 1,4.

7. Composition adhésive selon l'une quelconque des revendications précédentes **caractérisée en ce que** le(s) polyuréthane(s) présente(nt) une masse molaire moyenne en nombre allant de 3000 à 21000 g/mol.

8. Composition adhésive selon l'une quelconque des revendications précédentes, **caractérisée en ce que** le(s) polyuréthane(s) répond(ent) à la formule (II) suivante : 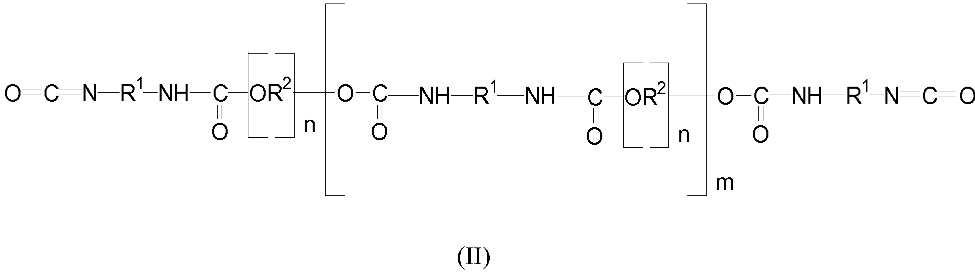 dans laquelle :
- R¹ représente un groupe divalent choisi parmi l'un des groupes divalents aliphatiques ou aromatiques suivants :
a1') le groupe divalent dérivé de l'isophorone diisocyanate : 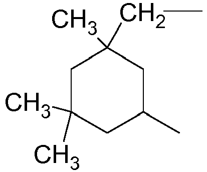
a2') le groupe divalent dérivé du 2,4-toluène diisocyanate : 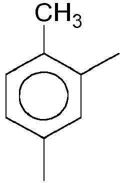
a3') le groupe divalent dérivé du 2,4'-diisocyanate de diphényleméthane : 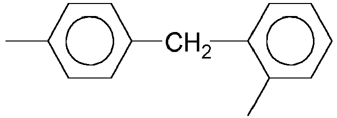
a4') le groupe divalent dérivé d'un allophanate d'hexaméthylène diisocyanate (HDI) de formule suivante (III): 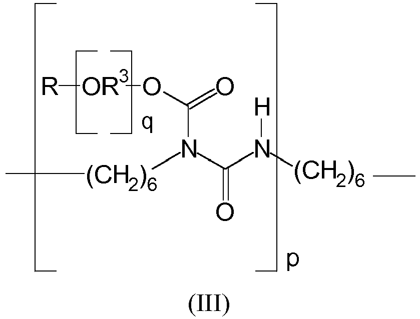 dans laquelle :
- p est un nombre entier allant de 1 à 2 ;
- q est un nombre entier allant de 0 à 9 ;
- R représente une chaine hydrocarbonée, saturée ou insaturée, cyclique ou acyclique, linéaire ou ramifiée, comprenant de 1 à 20 atomes de carbone ;
- R³ représente un groupe divalent alkylène, linéaire ou ramifié, ayant de 2 à 4 atomes de carbone ;
- R² identique ou différent de R³, représente un groupe divalent alkylène, linéaire ou ramifié, ayant de 2 à 4 atomes de carbones ;
- n est un nombre entier non nul tel que la masse molaire moyenne en nombre du bloc polyéther de formule -[OR²]ₙ- va de 2000 à 12000 g/mol ;
- m est un nombre entier tel que la masse molaire moyenne en nombre du polyuréthane va de 3000 à 21000 g/mol.

9. Composition adhésive selon la revendication précédente, **caractérisée en ce qu'**elle comprend :
a) de 40 à 60% en poids d'un polyuréthane de formule (II) tel que défini dans la revendication précédente, dans laquelle :
- R¹ représente le groupe divalent dérivé du 2,4-TDI,
- R² représente le groupe divalent propylène,
- n est un nombre entier non nul tel que la masse molaire moyenne en nombre du bloc polyéther de formule -[OR²]ₙ- va de 3500 à 8500 g/mol,
- m est un nombre entier tel que la masse molaire moyenne en nombre du polyuréthane va de 4600 à 16800 g/mol ;
b) de 39 à 59 % en poids d'une résine tackifiante compatible, de masse molaire moyenne en nombre allant de 200 Da à 5000 Da, et choisies parmi les résines susceptibles d'être obtenues par le procédé b2) ; et
c) de 0,01 à 1 % en poids d'au moins un catalyseur de réticulation,
par rapport au poids total de la composition adhésive.

10. Composition adhésive selon l'une quelconque des revendications précédentes, **caractérisée en ce qu'**elle comprend moins de 0,5% en poids de (chaque) monomère diisocyanate aliphatique (éventuellement présent), et/ou moins de 0,1% en poids de (chaque) monomère diisocyanate aromatique (éventuellement présent), par rapport au poids total de la composition adhésive.

11. Composition adhésive selon l'une quelconque des revendications précédentes, **caractérisée en ce qu'**elle présente une teneur en groupe NCO allant de 0,15 à 1,7% en poids par rapport au poids total de la composition adhésive.

12. Procédé de préparation d'une composition telle que définie dans l'une des revendications 1 à 11, **caractérisé en ce que** le(s) polyuréthane(s) est (sont) préparé(s) préalablement, puis mélangé(s) aux autres composés de la composition adhésive.

13. Support auto-adhésif susceptible d'être obtenu par un procédé comprenant les étapes suivantes :
(i') préchauffage à une température T4 de la composition adhésive telle que définie dans l'une quelconque des revendications 1 à 11, afin de la rendre liquide puis
(ii') enduction de ladite composition adhésive sur une couche support, et
(iii') réticulation de ladite composition adhésive par chauffage du support ainsi enduit à une température T5 allant de 70°C à 150°C, en présence d'humidité.

14. Utilisation du support auto-adhésif tel que défini dans la revendication précédente pour la fabrication d'étiquettes et/ou rubans auto-adhésifs.

## Patentansprüche

1. Vernetzbare Klebstoffzusammensetzung, umfassend:
a) 40 bis 60 Gew.-% mindestens eines Polyurethans, das durch eine Polyadditionsreaktion von mindestens einem aromatischen oder aliphatischen Diisocyanat, das aus den folgenden Diisocyanaten und einer Mischung davon ausgewählt ist:
a1) Isophorondiisocyanat,
a2) 2,4-Toluoldiisocyanat,
a3) Diphenylmethan-2,4'-diisocyanat,
a4) einem Allophanat-Derivat von Hexamethylendiisocyanat der Formel (I) 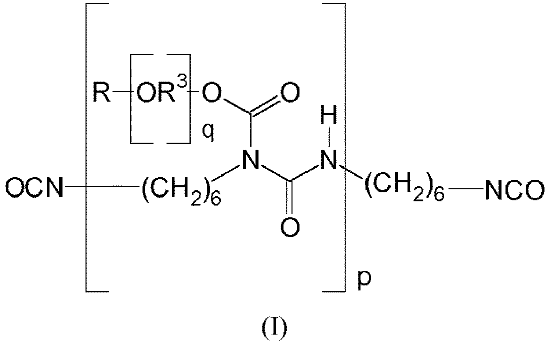 in der:
- p für eine ganze Zahl im Bereich von 1 bis 2 steht;
- q für eine ganze Zahl im Bereich von 0 bis 9 steht;
- R für eine gesättigte oder ungesättigte, cyclische oder acyclische, lineare oder verzweigte Kohlenwasserstoffkette mit 1 bis 20 Kohlenstoffatomen steht;
- R³ für eine lineare oder verzweigte zweiwertige Alkylengruppe mit 2 bis 4 Kohlenstoffatomen steht;
mit mindestens einem Polyetherdiol in An- oder Abwesenheit mindestens eines Reaktionskatalysators bei einer Reaktionstemperatur T1 von weniger als 95 °C unter wasserfreien Bedingungen und in Mengen von Diisocyanat(en) und Polyetherdiol(en), die zu einem NCO/OH-Molverhältnis, das als r₁ bezeichnet wird, im Bereich von 1,6 bis 1,9 führen; erhältlich ist;
b) 39 bis 59 Gew.-% mindestens eines kompatiblen Klebrigmacherharzes mit einer zahlenmittleren Molmasse im Bereich von 200 Da bis 5000 Da, das aus den Harzen ausgewählt ist, die durch eines der folgenden Verfahren erhältlich sind:
b1) Polymerisation von Terpen-Kohlenwasserstoffen in Gegenwart von Friedel-Crafts-Katalysatoren gefolgt von einer Reaktion mit Phenolen,
b2) Polymerisation von alpha-Methylstyrol gefolgt von einer Reaktion mit Phenolen; und
c) 0,01 bis 1 Gew.-% mindestens eines Vernetzungskatalysators,
wobei sich die Prozentangaben auf das Gesamtgewicht der Klebstoffzusammensetzung beziehen.

2. Klebstoffzusammensetzung nach Anspruch 1, **dadurch gekennzeichnet, dass** das aromatische oder aliphatische Diisocyanat bzw. die aromatischen oder aliphatischen Diisocyanate aus den folgenden Diisocyanaten und einer Mischung davon ausgewählt ist bzw. sind:
a1) Isophorondiisocyanat (IPDI),
a2) 2,4-Toluoldiisocyanat (2,4-TDI),
a4) einem Allophanat-Derivat von Hexamethylendiisocyanat (HDI) der Formel (I) gemäß Anspruch 1,
in der:
- p für eine ganze Zahl im Bereich von 1 bis 2 steht;
- q für eine ganze Zahl im Bereich von 2 bis 5 steht;
- R für eine gesättigte oder ungesättigte, cyclische oder acyclische, lineare oder verzweigte Kohlenwasserstoffkette mit 6 bis 14 Kohlenstoffatomen steht;
- R³ für eine zweiwertige Propylengruppe steht;
- p, q, R und R³ so gewählt sind, dass das Allophanat-Derivat von HDI der Formel (I) einen Gehalt an Isocyanatgruppen NCO im Bereich von 12 bis 14 Gew.-%, bezogen auf das Gewicht des Derivats, aufweist.

3. Klebstoffzusammensetzung nach Anspruch 1 oder 2, **dadurch gekennzeichnet, dass** das in Anspruch 1 oder 2 definierte Allophanat-Derivat von HDI der Formel (I) in Form einer Zusammensetzung vorliegt, in der es in einem Anteil von mindestens 99,5 Gew.-% enthalten ist, wobei die Zusammensetzung weniger als 0,5 Gew.-% HDI, bezogen auf das Gesamtgewicht der Zusammensetzung, umfasst.

4. Klebstoffzusammensetzung nach einem der vorhergehenden Ansprüche, **dadurch gekennzeichnet, dass** das Polyetherdiol bzw. die Polyetherdiole eine zahlenmittlere Molmasse im Bereich von 2000 bis 12.000 g/mol aufweist bzw. aufweisen.

5. Klebstoffzusammensetzung nach einem der vorhergehenden Ansprüche, **dadurch gekennzeichnet, dass** das Polyetherdiol bzw. die Polyetherdiole aus Polyoxyalkylendiolen, deren linearer oder verzweigter Alkylenteil 2 bis 4 Kohlenstoffatome umfasst, ausgewählt ist bzw. sind.

6. Klebstoffzusammensetzung nach einem der vorhergehenden Ansprüche, **dadurch gekennzeichnet, dass** das Polyetherdiol bzw. die Polyetherdiole aus Polyoxypropylendiolen mit einem Polymolekularitätsindex im Bereich von 1 bis 1,4 ausgewählt ist bzw. sind.

7. Klebstoffzusammensetzung nach einem der vorhergehenden Ansprüche, **dadurch gekennzeichnet, dass** das Polyurethan bzw. die Polyurethane eine zahlenmittlere Molmasse im Bereich von 3000 bis 21.000 g/mol aufweist bzw. aufweisen.

8. Klebstoffzusammensetzung nach einem der vorhergehenden Ansprüche, **dadurch gekennzeichnet, dass** das Polyurethan bzw. die Polyurethane der folgenden Formel (II) entspricht bzw. entsprechen: 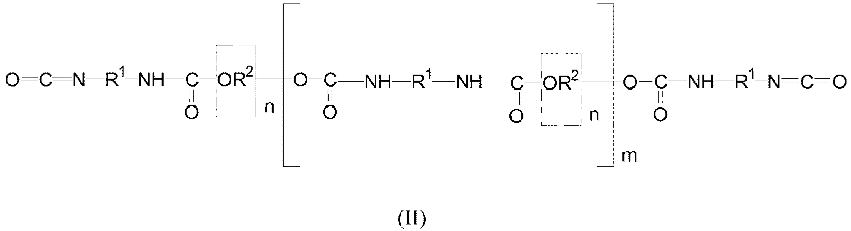 in der:
- R¹ für eine zweiwertige Gruppe steht, die aus den folgenden aliphatischen oder aromatischen zweiwertigen Gruppen ausgewählt ist:
a1') der zweiwertigen Gruppe, die sich von Isophorondiisocyanat ableitet: 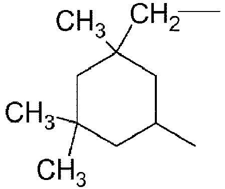
a2') der zweiwertigen Gruppe, die sich von 2,4-Toluoldiisocyanat ableitet: 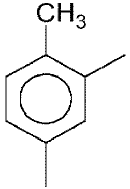
a3') der zweiwertigen Gruppe, die sich von Diphenylmethan-2,4'-diisocyanat ableitet: 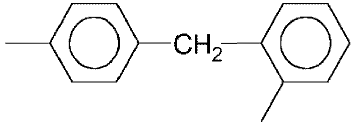
a4') der zweiwertigen Gruppe, die sich von einem Allophanat von Hexamethylendiisocyanat (HDI) der folgenden Formel (III) ableitet: 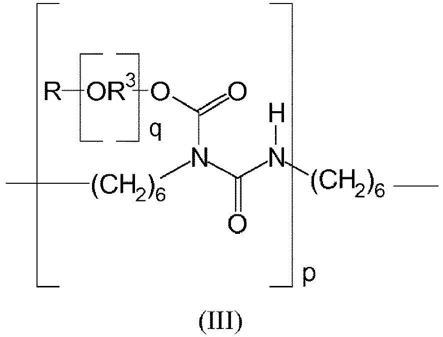 in der:
- p für eine ganze Zahl im Bereich von 1 bis 2 steht;
- q für eine ganze Zahl im Bereich von 0 bis 9 steht;
- R für eine gesättigte oder ungesättigte, cyclische oder acyclische, lineare oder verzweigte Kohlenwasserstoffkette mit 1 bis 20 Kohlenstoffatomen steht;
- R³ für eine lineare oder verzweigte zweiwertige Alkylengruppe mit 2 bis 4 Kohlenstoffatomen steht;
- R², das mit R³ identisch oder davon verschieden ist, für eine lineare oder verzweigte zweiwertige Alkylengruppe mit 2 bis 4 Kohlenstoffatomen steht;
- n für eine solche von null verschiedene ganze Zahl steht, dass die zahlenmittlere Molmasse des Polyetherblocks der Formel -[OR²]ₙ- im Bereich von 2000 bis 12.000 g/mol liegt;
- m für eine solche ganze Zahl steht, dass die zahlenmittlere Molmasse des Polyurethans im Bereich von 3000 bis 21.000 g/mol liegt.

9. Klebstoffzusammensetzung nach dem vorhergehenden Anspruch, **dadurch gekennzeichnet, dass** sie Folgendes umfasst:
a) 40 bis 60 Gew.-% eines Polyurethans der Formel (II) gemäß dem vorhergehenden Anspruch, in der:
- R¹ für die zweiwertige Gruppe, die sich von 2,4-TDI ableitet, steht,
- R² für die zweiwertige Propylengruppe steht,
- n für eine solche von null verschiedene ganze Zahl steht, dass die zahlenmittlere Molmasse des Polyetherblocks der Formel -[OR²]ₙ- im Bereich von 3500 bis 8500 g/mol liegt;
- m für eine solche ganze Zahl steht, dass die zahlenmittlere Molmasse des Polyurethans im Bereich von 4600 16.800 g/mol liegt;
b) 39 bis 59 Gew.-% eines kompatiblen Klebrigmacherharzes mit einer zahlenmittleren Molmasse im Bereich von 200 Da bis 5000 Da, das aus den Harzen ausgewählt ist, die durch das Verfahren b2) erhältlich sind; und
c) 0,01 bis 1 Gew.-% mindestens eines Vernetzungskatalysators,
bezogen auf das Gesamtgewicht der Klebstoffzusammensetzung.

10. Klebstoffzusammensetzung nach einem der vorhergehenden Ansprüche, **dadurch gekennzeichnet, dass** sie weniger als 0,5 Gew.-% von (jedem) (gegebenenfalls vorhandenem) aliphatischem Diisocyanat-Monomer und/oder weniger als 0,1 Gew.-% von (jedem) (gegebenenfalls vorhandenem) aromatischem Diisocyanat-Monomer, bezogen auf das Gesamtgewicht der Klebstoffzusammensetzung, umfasst.

11. Klebstoffzusammensetzung nach einem der vorhergehenden Ansprüche, **dadurch gekennzeichnet, dass** sie einen Gehalt an NCO-Gruppen im Bereich von 0,15 bis 1,7 Gew.-%, bezogen auf das Gesamtgewicht der Klebstoffzusammensetzung, aufweist.

12. Verfahren zur Herstellung einer Zusammensetzung gemäß einem der Ansprüche 1 bis 11, **dadurch gekennzeichnet, dass** das Polyurethan bzw. die Polyurethane vorher hergestellt und dann mit den anderen Verbindungen der Klebstoffzusammensetzung gemischt wird bzw. werden.

13. Selbstklebender Träger, der durch ein Verfahren erhältlich ist, das folgende Schritte umfasst:
(i') Vorerhitzen der Klebstoffzusammensetzung gemäß einem der Ansprüche 1 bis 11 auf eine Temperatur T4, um sie flüssig zu machen, dann
(ii') Auftragen der Klebstoffzusammensetzung auf eine Trägerschicht und
(iii') Vernetzen der Klebstoffzusammensetzung durch Erhitzen des so beschichteten Trägers auf eine Temperatur T5 im Bereich von 70 °C bis 150 °C in Gegenwart von Feuchtigkeit.

14. Verwendung des selbstklebenden Trägers gemäß dem vorhergehenden Anspruch zur Herstellung von Etiketten und/oder Selbstklebebändern.

## Claims

1. Crosslinkable adhesive composition comprising:
a) from 40 to 60 wt% of at least one polyurethane obtainable by a polyaddition reaction:
of at least one aromatic or aliphatic diisocyanate selected from the following diisocyanates, and mixture thereof:
a1) isophorone diisocyanate,
a2) 2,4-toluene diisocyanate,
a3) diphenylmethane-2,4'-diisocyanate,
a4) an allophanate derivative of hexamethylene diisocyanate of formula (I): 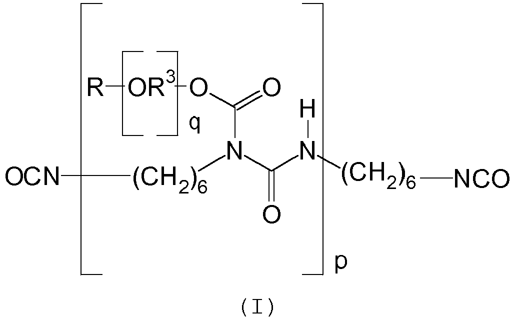 in which:
- p is an integer in the range from 1 to 2;
- q is an integer in the range from 0 to 9;
- R represents a hydrocarbon chain, saturated or unsaturated, cyclic or acyclic, linear or branched, comprising from 1 to 20 carbon atoms;
- R³ represents a divalent alkylene group, linear or branched, having from 2 to 4 carbon atoms;
with at least one polyether diol, with or without the presence of at least one reaction catalyst, at a reaction temperature T1 below 95°C, in anhydrous conditions, and in amounts of diisocyanate(s) and of polyether diol(s) leading to an NCO/OH molar ratio, designated r₁, in the range from 1.6 to 1.9;
b) from 39 to 59 wt% of at least one compatible tackifying resin, with a number-average molecular weight in the range from 200 Da to 5000 Da, and selected from the resins obtainable by one of the following methods:
b1) polymerization of terpene hydrocarbons in the presence of Friedel-Crafts catalysts, followed by reaction with phenols,
b2) polymerization of alpha-methylstyrene, followed by reaction with phenols; and
c) from 0.01 to 1 wt% of at least one crosslinking catalyst, said percentages being expressed by weight relative to the total weight of the adhesive composition.

2. Adhesive composition according to Claim 1, **characterized in that** the aromatic or aliphatic diisocyanate(s) is (are) selected from the following diisocyanates, and mixture thereof:
a1) isophorone diisocyanate (IPDI),
a2) 2,4-toluene diisocyanate (2,4-TDI),
a4) an allophanate derivative of hexamethylene diisocyanate (HDI) of formula (I) as described above, in which:
- p is an integer in the range from 1 to 2;
- q is an integer in the range from 2 to 5;
- R represents a hydrocarbon chain, saturated or unsaturated, cyclic or acyclic, linear or branched, comprising from 6 to 14 carbon atoms;
- R³ represents a divalent propylene group;
- p, q, R and R³ are selected such that the allophanate derivative of HDI of formula (I) comprises a content of isocyanate NCO group in the range from 12 to 14 wt% relative to the weight of said derivative.

3. Adhesive composition according to Claim 1 or 2, **characterized in that** the allophanate derivative of HDI of formula (I) defined in Claim 1 or 2 is in the form of a composition in which it is comprised at a level of at least 99.5 wt%, said composition comprising less than 0.5 wt% of HDI relative to the total weight of said composition.

4. Adhesive composition according to any one of the preceding claims, **characterized in that** the polyether diol(s) has (have) a number-average molecular weight in the range from 2000 to 12000 g/mol.

5. Adhesive composition according to any one of the preceding claims, **characterized in that** the polyether diol(s) is (are) selected from the polyoxyalkylene diols, whose alkylene part, linear or branched, comprises from 2 to 4 carbon atoms.

6. Adhesive composition according to any one of the preceding claims, **characterized in that** the polyether diol(s) is (are) selected from the polyoxypropylene diols with a polydispersity index in the range from 1 to 1.4.

7. Adhesive composition according to any one of the preceding claims, **characterized in that** the polyurethane(s) has (have) a number-average molecular weight in the range from 3000 to 21000 g/mol.

8. Adhesive composition according to any one of the preceding claims, **characterized in that** the polyurethane(s) correspond(s) to the following formula (II): 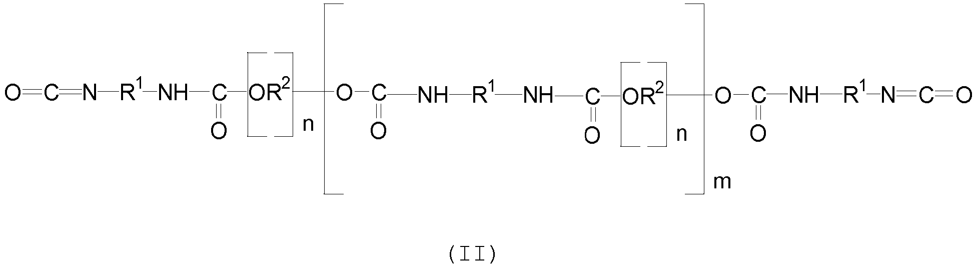 in which:
- R¹ represents a divalent group selected from one of the following aliphatic or aromatic divalent groups:
a1') the divalent group derived from isophorone diisocyanate: 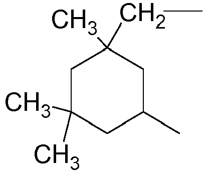
a2') the divalent group derived from 2,4-toluene diisocyanate: 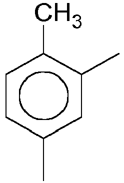
a3') the divalent group derived from diphenylmethane-2,4'-diisocyanate: 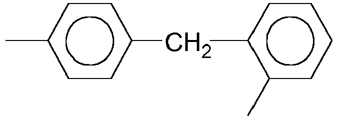
a4') the divalent group derived from an allophanate of hexamethylene diisocyanate (HDI) of the following formula (III) : 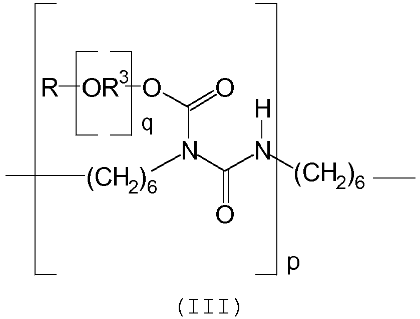 in which:
- p is an integer in the range from 1 to 2;
- q is an integer in the range from 0 to 9;
- R represents a hydrocarbon chain, saturated or unsaturated, cyclic or acyclic, linear or branched, comprising from 1 to 20 carbon atoms;
- R³ represents a divalent alkylene group, linear or branched, having from 2 to 4 carbon atoms;
- R², which may be identical to or different from R³, represents a divalent alkylene group, linear or branched, having from 2 to 4 carbon atoms;
- n is a non-zero integer such that the number-average molecular weight of the polyether block of formula -[OR²]ₙ- is in the range from 2000 to 12000 g/mol;
- m is an integer such that the number-average molecular weight of the polyurethane is in the range from 3000 to 21000 g/mol.

9. Adhesive composition according to the preceding claim, **characterized in that** it comprises:
a) from 40 to 60 wt% of a polyurethane of formula (II) as defined in the preceding claim, in which:
- R¹ represents the divalent group derived from 2,4-TDI,
- R² represents the divalent propylene group,
- n is a non-zero integer such that the number-average molecular weight of the polyether block of formula -[OR²]ₙ- is in the range from 3500 to 8500 g/mol,
- m is an integer such that the number-average molecular weight of the polyurethane is in the range from 4600 to 16800 g/mol;
b) from 39 to 59 wt% of a compatible tackifying resin, with a number-average molecular weight in the range from 200 Da to 5000 Da, and selected from the resins obtainable by method b2); and
c) from 0.01 to 1 wt% of at least one crosslinking catalyst, relative to the total weight of the adhesive composition.

10. Adhesive composition according to any one of the preceding claims, **characterized in that** it comprises less than 0.5 wt% of (each) aliphatic diisocyanate monomer (optionally present), and/or less than 0.1 wt% of (each) aromatic diisocyanate monomer (optionally present), relative to the total weight of the adhesive composition.

11. Adhesive composition according to any one of the preceding claims, **characterized in that** it has a content of NCO group in the range from 0.15 to 1.7 wt% relative to the total weight of the adhesive composition.

12. Method of preparing a composition as defined in one of Claims 1 to 11, **characterized in that** the polyurethane (s) is (are) prepared beforehand, and then mixed with the other compounds of the adhesive composition.

13. Self-adhesive support obtainable by a method comprising the following steps:
(i') preheating the adhesive composition as defined in any one of Claims 1 to 11 to a temperature T4, in order to make it liquid, and then
(ii') coating said adhesive composition on a support layer, and
(iii') crosslinking said adhesive composition by heating the coated support to a temperature T5 in the range from 70°C to 150°C, in the presence of humidity.

14. Use of the self-adhesive support as defined in the preceding claim for making labels and/or self-adhesive tapes.
